# EUROPÄISCHE PATENTSCHRIFT

(11) **EP 2 251 283 B1**
(45) Veröffentlichungstag und Bekanntmachung des Hinweises auf die Patenterteilung: **01.02.2012**
(21) Anmeldenummer: 10075197.3
(22) Anmeldetag: 14.05.2010
(51) Int. Cl.: B65G 47/84, A24C 5/32

(54) **Fördervorrichtung mit Unterdruckansaugung**
Conveyor device with vacuum suction
Dispositif de transport doté d'une aspiration sous vide

(30) Priorität: 15.05.2009 DE 102009022024
(43) Veröffentlichungstag der Anmeldung: 17.11.2010
(73) Patentinhaber: Hauni Maschinenbau AG, 21033 Hamburg (DE)
(72) Erfinder: Schlisio, Siegfried, 21502 Geesthacht (DE); Wesner, Gregor, 22043 Hamburg (DE)
(74) Vertreter: Wenzel & Kalkoff

(56) Entgegenhaltungen:
- DE-A1- 1 532 115

## Beschreibung

Die Erfindung betrifft eine Fördervorrichtung für stabförmige Artikel zum Umleiten der stabförmigen Artikel aus einem ersten Transportstrom in einen zweiten Transportstrom, wobei der eine der beiden Transportströme eine in Bezug auf die stabförmigen Artikel längsaxiale Förderrichtung aufweist und der andere der beiden Transportströme eine in Bezug auf die stabförmigen Artikel queraxiale Förderrichtung aufweist, die quer zur längsaxialen Förderrichtung verläuft.

Insbesondere betrifft die Erfindung eine Fördervorrichtung mit einem Längsförderer mit einem Grundkörper und einer Mehrzahl an Umlaufkörpern, wobei der Grundkörper eine Mehrzahl an Durchlassöffnungen umfasst und für eine Drehbewegung um seine Mittelachse drehbar gelagert ist, wobei jeder der Umlaufkörper einen Schaftabschnitt, einen Ansaugkanal und mindestens einen Haltekopf umfasst und für eine Umlaufbewegung auf einer definierten Umlaufbahn bei der Drehbewegung des Grundkörpers um seine Mittelachse angepasst ist. Der Schaftabschnitt der Umlaufkörper ist in dem Grundkörper um die Mittelachse des Schaftabschnitts drehbar gelagert und der mindestens eine Haltekopf weist wenigstens eine Ansaugöffnung auf und ist zum Halten von wenigstens einem stabförmigen Artikel mittels Unterdruck an der wenigstens einen Ansaugöffnung angepasst. Der Ansaugkanal weist an seinem einen Ende einen ersten Endbereich und an seinem anderen Ende einen zweiten Endbereich auf, wobei der erste Endbereich mit der wenigstens einen Ansaugöffnung des Haltekopfs durchgängig verbunden ist und wobei der zweite Endbereich mit jeweils einer Durchlassöffnung des Grundkörpers durchgängig verbindbar ausgebildet ist.

Weiterhin betrifft die Erfindung ein Verfahren zum Umleiten von stabförmigen Artikeln aus einem ersten Transportstrom in einen zweiten Transportstrom, wobei der eine der beiden Transportströme eine in Bezug auf die stabförmigen Artikel längsaxiale Förderrichtung aufweist und der andere der beiden Transportströme eine in Bezug auf die stabförmigen Artikel queraxiale Förderrichtung, die quer zur längsaxialen Förderrichtung verläuft, aufweist. Das Verfahren umfasst die Schritte, dass in einem ersten Transportstrom zumindest ein stabförmiger Artikel einem Längsförderer zugeführt wird, so dass der zumindest eine stabförmige Artikel in die Nähe einer Ansaugöffnung eines Haltekopf eines Umlaufkörpers gelangt, der drehbar an einem seinerseits drehbaren Grundkörper des Längsförderers gelagert ist, dass der zumindest eine stabförmige Artikel mittels Unterdruck an die Ansaugöffnung angesaugt wird, dass der Grundkörper des Längsförderers in einer ersten Drehrichtung gedreht wird und der Umlaufkörper gleichzeitig gegenüber dem Grundkörper in einer zweiten Drehrichtung, die der ersten Drehrichtung entgegengesetzt ist, gedreht wird, wobei der zumindest eine stabförmige Artikel mittels Unterdruck an dem Haltekopf des Umlaufkörpers gehalten wird, bis eine Löseposition erreicht ist, dass in der Löseposition der an dem Haltekopf gehaltene zumindest eine stabförmige Artikel von der Ansaugöffnung abgelöst wird, und dass der zumindest eine stabförmige Artikel schließlich in einen zweiten Transportstrom weitergeleitet wird, wobei das Ansaugen und Ablösen des zumindest einen stabförmigen Artikels durch Öffnen bzw. Schließen eines Flächenventils gesteuert wird, das während des Haltens des zumindest einen stabförmigen Artikels geöffnet ist, wobei das Öffnen und Schließen des Flächenventils infolge der Drehbewegung des Umlaufkörpers relativ zum Grundkörper eintritt.

Derartige Fördervorrichtungen für stabförmige Artikel und Verfahren zum Umleiten von stabförmigen Artikeln werden insbesondere in der Tabak verarbeitenden Industrie eingesetzt. So werden in einer Filterfertigungsmaschine Stränge aus Filtervliesmaterial hergestellt, die in Filterstäbe zerteilt werden. Ferner werden in einer Zigarettenstrangmaschine Stränge aus Tabak hergestellt, die üblicherweise in einzelne oder doppeltlange Tabakstöcke zerteilt werden. Die Filterstäbe wie auch die Tabakstöcke werden zunächst in ihrer Längsrichtung gefördert. Zur weiteren Bearbeitung werden die Filterstäbe bzw. Tabakstöcke an weitere Bearbeitungsmaschine übergeben, wozu die Filterstäbe bzw. Tabakstöcke üblicherweise von ihrer längsaxialen Transportrichtung in eine queraxiale Transportrichtung umgelenkt werden, wobei die Transportrichtungen quer zueinander verlaufen. Darüber hinaus existieren auch Transportstrecken, in denen die Filterstäbe bzw. Tabakstöcke aus einer queraxialen Transportrichtung in eine längsaxiale Transportrichtung umgelenkt werden.

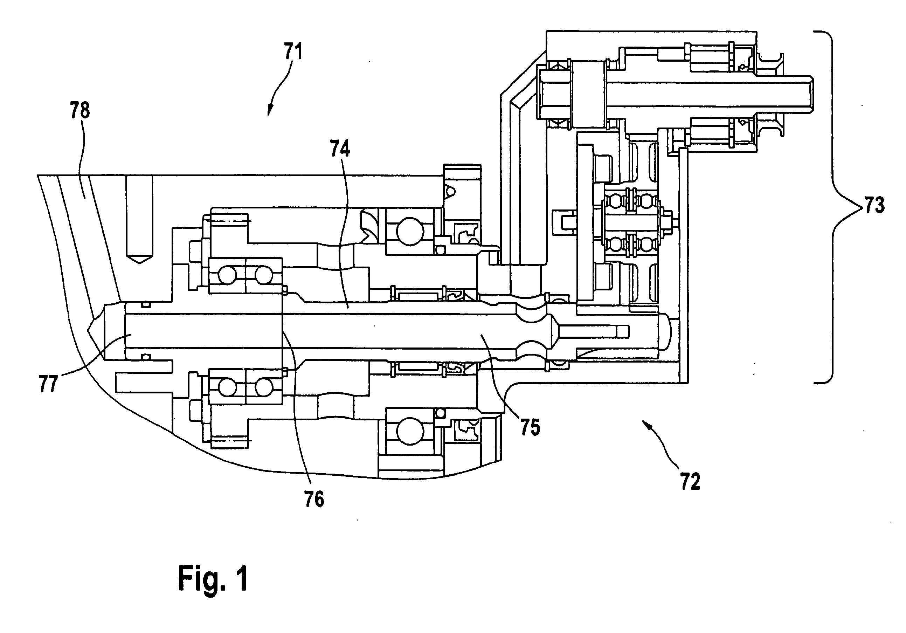

Zur Umlenkung der unterschiedlichen Transportströme und damit zur Übergabe der stabförmigen Artikel von einem Längsförderer an einen Querförderer oder umgekehrt sind eine Vielzahl an unterschiedlichen Vorrichtungen und Verfahren bekannt. Eine besonders günstige Vorrichtung weist einen Längsförderer auf, der stabförmige Artikel, die aus einer bestimmten Transportrichtung zugeführt werden, aufnimmt und diese nacheinander in einer anderen Transportrichtung weiterleitet. Der Längsförderer ist hierbei als eine so genannte "Spinne" ausgebildet, die eine Trommel als Grundkörper aufweist. An der einen Stirnseite der Trommel sind mehrere Gondeln als Umlaufkörper befestigt. Ein Beispiel für einen derartigen Längsförderer ist in Fig. 1 dargestellt (Zigarettenherstellmaschine PROTOS-M8, Hauni Maschinenbau AG).

Fig. 1 zeigt einen Ausschnitt aus einer Schnittdarstellung eines Längsförderers (der besseren Übersicht halber wurden der Haltekopf, die hinter der Schnittebene liegenden Gondeln sowie die Schraffuren der Schnittflächen weggelassen). Die Trommel 71 ist liegend angeordnet, so dass ihre Mittelachse zumindest im Wesentlichen horizontal in der Papierebene verläuft. Im Betrieb führt die Trommel 71 eine Drehbewegung um diese Mittelachse aus, wodurch die Gondeln 72 eine Umlaufbewegung ausführen, die auf einer Kreisbahn liegt. Jede Gondel 72 weist an einem Ausleger 73 einen Haltekopf mit Ansaugöffnungen auf. Dort wird mindestens einer der zugeführten stabförmigen Artikel angesaugt, an dem Haltekopf während einer Teildrehung der Trommel 71 mittels Unterdruck gehalten und schließlich von dem Haltekopf wieder abgelöst. Üblicherweise wird dieser Längsförderer so betrieben, dass die Drehung der Trommel 71 im tiefsten Punkt mit der längsaxialen Förderrichtung der stabförmigen Artikel übereinstimmt.

Die Ausleger 73 der Gondeln 72 sind ihrerseits in der Trommel 71 um einen Schaft 74 drehbar befestigt, so dass diese zusätzlich zu der Umlaufbewegung (die der Drehung der Trommel 71 folgt) eine eigene Drehbewegung ausführen können, deren Drehrichtung der Drehrichtung der Trommel 71 entgegengesetzt ist. Infolge eines Abgleichs der Drehgeschwindigkeiten der Trommel 71 und der Ausleger 73 erfolgt die Umlaufbewegung der Spitze der Ausleger 73 auf einer definierten Umlaufbahn, in der Regel in einer elliptischen Umlaufebene. Diese ist üblicherweise so gewählt, dass im höchsten und tiefsten Punkt der Umlaufbahn (bei einer Ellipse die Nebenscheitel) als längsaxialen Übergabepunkt die Bahngeschwindigkeit der Ausleger auf der Ellipsenbahn am größten ist, wohingegen in den Punkten, die gegenüber diesem Punkt um 90° versetzt sind (bei einer Ellipse die Hauptscheitel), die Bahngeschwindigkeit der Ausleger auf der Ellipsenbahn am geringsten ist, so dass diese als queraxiale Übergabepunkte verwendet werden. Um zu gewährleisten, dass die stabförmigen Artikel in jedem Punkt der Umlaufbahn die gleiche definierte räumliche Ausrichtung aufweisen (üblicherweise in horizontaler Lage), sind die Halteköpfe an den Auslegern 73 darüber hinaus ebenfalls drehbar gelagert.

Die stabförmigen Artikel werden an den Halteköpfen mittels Unterdruck gehalten, der von einer Pumpeneinrichtung erzeugt wird und über ein Unterdruckleitungssystem an die Ansaugöffnungen weitergeleitet wird. Das Unterdruckleitungssystem umfasst Unterdruckleitungen 75 innerhalb der Gondel 72 wie auch Unterdruckleitungen 77, 78 innerhalb der Trommel 71.

Innerhalb jeder Gondel 72 erstreckt sich die Unterdruckleitung 75 von den Ansaugöffnungen im Haltekopf am vorderen Ende der Gondel 72 über den Ausleger 73 und den Schaft 74 der Gondel 72 bis zum Schaftende am hinteren Teil der Gondel 72, der in der Trommel 71 gelagert ist. Der Schaft 74 ist hier als Hohlschaft ausgebildet, der in seinem Innern die Unterdruckleitung 75 führt. Das hintere Schaftende weist eine Axialöffnung 76 auf, über die die Unterdruckleitung 75 der Gondel 72 mit der Unterdruckleitung der Trommel 71 verbunden ist.

Innerhalb der Trommel 71 erstreckt sich jede Unterdruckleitung von einem Aufnahmeraum 77 zu einer Durchlassöffnung 78 in der äußeren Mantelfläche der Trommel 71. Der Aufnahmeraum 77 liegt in der Verlängerung der Schaftachse der Gondel 72 und reicht bis zum hinteren Schaftende der Gondel 72, so dass die Axialöffnung 76 am Schaftende der Gondel 72 mit dem Aufnahmeraum 77 verbunden ist und sich bei der Drehung der Gondel 72 um die Schaftachse in dem Aufnahmeraum 77 dreht.

Nicht in Fig. 1 dargestellt ist der Teil des Unterdruckleitungssystems, der den Längsförderer über einen Vakuumschuh mit der Pumpeneinrichtung verbindet. Ein solcher Vakuumschuh weist eine konvexe, dicht an der Mantelfläche der Trommel 71 anliegende Kontaktfläche mit einem Schlitz auf, wobei der Vakuumschuh die Mantelfläche der Trommel 71 nur in einem Teil ihres Gesamtumfangs umgibt. Hierdurch ist lediglich ein Teil der Durchlassöffnungen 78 der Trommel 71 mit dem Schlitz des Vakuumschuhs verbunden.

Bei der Drehbewegung der Trommel 71 werden unterschiedliche Durchlassöffnungen 78 an dem Schlitz vorbeigeführt. Gelangt eine Durchlassöffnung 78 in den Bereich des Vakuumschuhs und somit vor dessen Schlitz, so wird das mit der jeweiligen Durchlassöffnung 78 verbundene Unterdruckleitungssystem evakuiert und der stabförmige Artikel an den Haltekopf angesaugt. Der Unterdruck wird dort so lange aufrechterhalten und der stabförmige Artikel an dem Haltekopf gehalten wie sich die Durchlassöffnung 78 vor dem Schlitz befindet. Verlässt die Durchlassöffnung 78 den Bereich des Vakuumschuhs, so wird der jeweilige Teil des Unterdruckleitungssystems belüftet und der Unterdruck dort abgebaut, wodurch sich der stabförmige Artikel vom Haltekopf ablöst. Auf diese Weise ist eine Unterdrucksteuerung realisiert, bei der das Aufnehmen, Halten und Ablösen der stabförmigen Artikel über die Größe und Anordnung des Schlitzes des Vakuumschuhs geregelt wird.

Bei den üblicherweise verwendeten hohen Arbeitsgeschwindigkeiten ist es hierbei wichtig, dass die Fördervorrichtung zuverlässig kontinuierlich arbeitet und auch unter widrigen Umständen ein Fördern erlaubt. So ist es etwa von Bedeutung, dass selbst dann, wenn sich einer oder mehrere der stabförmigen Artikel ungewollt ablösen und es dadurch zu einem Unterdruckabfall im System kommt, der Unterdruck insgesamt hoch genug bleibt, um ein Ablösen der anderen stabförmigen Artikel zu verhindern und diese verlässlich zu fördern. Dies erfordert im System einen Unterdruck von 190 mbar, weshalb in der Regel Pumpeneinrichtungen hoher Leistung verwendet werden, die kontinuierlich große Luftmengen absaugen können, beispielsweise separate Seitenkanalverdichter.

Grade bei einem großen abgesaugten Luftvolumen jedoch kommt es infolge des großen Volumenstroms es zu einer starken Verunreinigung der Pumpeneinrichtung. Daher ist die Pumpeneinrichtung in sehr kurzen Intervallen zu reinigen und zu warten. Darübef hinaus muss der Betrieb ständig überwacht werden, um eine Funktionsbeeinträchtigung infolge des Unterdruckabfalls zu vermeiden, der bei zu starker Verunreinigung auftreten kann. Dies ist um so problematischer, wenn die Fördervorrichtung zum Fördern von Tabakstöcken oder Filterstäben verwendet wird, da diese Artikel nicht nur stark luftdurchlässig sind (und daher zum Halten dieser Artikel ohnehin ein besonders starker Unterdruck erforderlich ist), sondern darüber hinaus aus vereinzelbaren faserartigen Materialien gefertigt sind, die eine besonders starke Verunreinigung der abgesaugten Luft zur Folge haben.

Eine Fördervorrichtung mit den Merkmalen des Oberbegriffes des Anspruches 1 sowie ein Verfahren mit den Verfahrensschritten des Oberbegriffes des Anspruches 13 sind aus dem Dokument DE 15 32 115 A1 bekannt.

Aufgabe der vorliegenden Erfindung war es daher, eine Fördervorrichtung zur Verfügung zu stellen, mit der sich auf einfache Weise auch für herkömmliche Unterdruckaggregate ein starkes und zuverlässiges Halten der stabförmigen Artikel erreichen lässt und die darüber hinaus eine hochpräzise Steuerung des Transportvorgangs ermöglicht.

Diese Aufgabe wird erfindungsgemäß durch ein Gerät der eingangs genannten Art gelöst, bei dem jedem Umlaufkörper eine Steuerscheibe zugeordnet ist, die zumindest an einem Teil des Schaftabschnitts vorgesehen ist und die zum Steuern der Durchgängigkeit der Verbindung zwischen dem zweiten Endbereich des Ansaugkanals des Umlaufkörpers und der Durchlassöffnung des Grundkörpers bei einer Drehung des Umlaufkörpers um die Mittelachse des Schaftabschnitts eingerichtet ist. Die Steuerscheibe weist dabei eine kreisbogenförmige Vertiefung auf, die auf einem Vollkreis, der bezüglich der Mittelachse des Schaftabschnitts zumindest im Wesentlichen konzentrisch ist, als Kreisbogen angeordnet ist, der einen Mittelpunktswinkel von weniger als 360° aufweist. Die Steuerscheibe ist derart ausgebildet, dass bei jeder Vollkreisdrehung des Umlaufkörpers um die Mittelachse des Schaftabschnitts der Ansaugkanal des Umlaufkörpers über die kreisbogenförmige Vertiefung der Steuerscheibe mit der jeweiligen Durchlassöffnung des Grundkörpers für einen Drehwinkelbereich durchgängig verbunden ist, der dem Mittelpunktswinkel des Kreisbogens entspricht, und dass der Ansaugkanal des Umlaufkörpers gegenüber der jeweiligen Durchlassöffnung des Grundkörpers für einen Drehwinkel abgesperrt ist, der einem Winkel von 360° abzüglich des Mittelpunktswinkels des Kreisbogens entspricht.

Demzufolge erfolgt erfindungsgemäß das Verbinden und Trennen des Ansaugkanals des Umlaufkörpers mit der Durchlassöffnung des Grundkörpers über eine Steuerscheibe. Jedem Umlaufkörper ist eine solche Steuerscheibe zugeordnet. Diese ist als Teil eines Flächenventils ausgebildet, wobei die Verbindung des Ansaugkanals mit dem Unterdruckaggregat durch die Drehbewegung des Umlaufkörpers relativ zum Grundkörper periodisch freigegeben und verschlossen wird. Demzufolge dient die kreisbogenförmige Vertiefung der Steuerscheibe gleichzeitig als Verbindungskanal des Unterdruckleitungssystems und als Steuerkurve für das Öffnen und Schließen des Flächenventils. Anders als bei der aus dem Stand der Technik bekannten Fördervorrichtung regelt hier nicht die Drehung des Grundkörpers sondern die Drehung jedes Umlaufkörpers das Öffnen und Schließen der Unlerdruckverbindung. Auf diese Weise wird beim Anlegen eines Unterdrucks an den Ansaugkanal des Umlaufkörpers eine erheblich präzisere Regelung erreicht als dies mit konventionellen Systemen möglich ist.

Dadurch, dass die Steuerscheibe nicht am Schaftende vorgesehen ist sondern vielmehr an einem Schaftabschnitt, ist ferner die Länge des Ansaugkanals gegenüber der aus dem Stand der Technik bekannten Fördervorrichtung deutlich verringert. Dadurch wird das Volumen der Luft kleiner, das bei jedem Öffnen des Flächenventils aus dem Umlaufkörper und dem Grundkörper beim Anlegen des Unterdrucks an den Ansaugkanal abzusaugen ist, so dass bei gleicher Leistung der Pumpeneinrichtung eine erheblich an jeder Ansaugöffnung höhere effektive Ansaugleistung bereitgestellt wird.

Günstig ist es dabei, wenn die Steuerscheiben in den Grundkörper integriert sind. Auf diese Weise wird eine besonders einfache und wartungsarme Fördervorrichtung erhalten, bei der das Öffnen und Schließen der Flächenventile bei der Drehbewegung der Schaftabschnitte der Umlaufkörper gegenüber der Steuerscheibe erfolgt. Der einfache Aufbau ermöglicht es zudem, für die Drehung der Umlaufkörper um ihre jeweilige Mittelachse des Schaftabschnitts auch ohne weitere Anpassungsmaßnahmen hohe Drehgeschwindigkeiten zu realisieren, da die Steuerscheibe bei dieser Drehbewegung nicht bewegt werden muss (sondern lediglich in der gegenläufigen Drehbewegung um die Mittelachse der Trommel zusammen mit der Trommel bewegt wird).

Dabei ist es insbesondere von Vorteil, wenn der Grundkörper als Trommelwalze mit zwei Grundseiten und einer Mantelseite ausgebildet ist, deren eine Grundseite eine Mehrzahl an Drehlageröffnungen aufweist, die als Lager der Schaftabschnitte der Umlaufkörper ausgebildet sind, wobei jede Steuerscheibe als kreisringförmiger Bereich der Grundseite der Trommelwalze ausgebildet ist, der eine Ringgrundseite umfasst, die jeweils eine der Kreisöffnungen konzentrisch umgibt und die eine erste Dichtfläche und die kreisbogenförmige Vertiefung aufweist, die mit der jeweiligen Durchlassöffnung durchgängig verbunden ist. Infolge dieser Ausgestaltung wird eine besonders leicht abdichtbare Verbindung zwischen dem Ansaugkanal und der Durchlassöffnung erhalten, die nur wenig Nebenluft ziehen kann, so dass der am Haltekopf anliegende Unterdruck während des Haltens der stabförmigen Artikel besonders stark ist. Dies ist insbesondere dann der Fall, wenn jeder Umlaufkörper eine um den Schaftabschnitt angeordnete Kragenscheibe mit einer mit der ersten Dichtfläche korrespondierenden zweiten Dichtfläche und einer Durchführungsöffnung, die den zweiten Endbereich des Ansaugkanals bildet, aufweist, wobei in Radialrichtung der mittlere Abstand der Durchführungsöffnung von der Mittelachse des Schaftabschnitts zumindest in etwa so groß ist wie der mittlere Abstand der kreisbogenförmigen Vertiefung von dem Mittelpunkt der Drehlageröffnung. Infolge der großen Überlappungsfläche zwischen Kragenscheibe und Ringgrundseite der Steuerscheibe wird eine besonders hohe Dichtigkeit der Flächenventilverbindung erzielt, weshalb die Unterdruckverluste (etwa durch unerwünschtes Belüften) minimiert werden und der Unterdruck am Haltekopf groß genug ist, um sogar stark poröse stabförmigen Artikel zuverlässig halten zu können.

Anstelle von in den Grundkörper integrierten Steuerscheiben kann jede Steuerscheibe aber auch als Teil des zugeordneten Umlaufkörpers ausgebildet sein. Auf diese Weise ist es möglich, bei Bedarf die Steuerscheiben ohne Demontage des gesamten Grundkörpers lediglich durch Ausbauen der Umlaufkörper und Ablösen der Steuerscheiben von dem Umlaufkörper gegen einen anderen Steuerscheibensatz auszutauschen. Durch einen solchen Wechsel der Steuerscheiben lassen sich dann auf einfache Weise unterschiedliche Steuerkurven realisieren. Insbesondere ist es dabei günstig, wenn die Steuerscheibe eine mit dem Umlaufkörper drehfest verbundene Ringscheibe ist, die eine äußere Mantelseite, eine innere Mantelseite und zwei Ringgrundseiten aufweist, wobei die innere Mantelseite einen Teilbereich des Schaftabschnitts des Umlaufkörpers umgibt, die äußere Mantelseite als erste Dichtfläche ausgebildet ist und die kreisbogenförmige Vertiefung aufweist, die zum Umfang der äußeren Mantelseite zumindest im Wesentlichen parallel verläuft und die den zweiten Endbereich des Ansaugkanals bildet, und die eine der beiden Ringgrundseiten eine Durchführungsöffnung aufweist, die einen Teil des Ansaugkanals des Umlaufkörpers bildet und die mit der kreisbogenförmigen Vertiefung durchgängig verbunden ist. Bei dieser Ausbildung werden besonders einfache Umlaufkörper erhalten, die gleichzeitig eine sichere Führung des Schaftabschnitts des Umlaufkörpers bei der Drehbewegung durch die Steuerscheibe ermöglichen. Gleichzeitig kann der Grundkörper als Trommelwalze mit zwei Grundseiten und einer Mantelseite ausgebildet sein, deren eine Grundseite eine Mehrzahl an Drehlageröffnungen aufweist, die als Lager der Schaftabschnitte der Umlaufkörper ausgebildet sind, wobei jede Drehlageröffnung in eine Aufnahmevertiefung für eine Steuerscheibe übergeht, die eine mit der ersten Dichtfläche korrespondierende zweite Dichtfläche und die Durchlassöffnung aufweist, und jeder Umlaufkörper in der korrespondierenden Drehlageröffnung derart angeordnet ist, dass in axialer Richtung der mittlere Abstand der kreisbogenförmigen Vertiefung von den Ringgrundseiten der Steuerscheibe zumindest in etwa so groß ist wie der mittlere Abstand der Durchlassöffnung von den Ringgrundseiten der Steuerscheibe. Neben der zusätzlichen Führung des Schaftabschnitts wird so eine einfache und gleichzeitig dichte Verbindung zwischen dem Ansaukanal des Umlaufkörpers und der Durchlassöffnung des Grundkörpers erhalten, die einen hinreichend hohen Unterdruck bietet (wenngleich dieser etwas geringer ausfällt als bei Verwendung der in den Grundkörper integrierten Steuerscheiben).

Bei der Ausbildung, bei der jede Steuerscheibe Teil des zugeordneten Umlaufkörpers ist, hat es sich ferner als vorteilhaft herausgestellt, wenn die äußere Mantelseite der Steuerscheibe zusätzlich zu der kreisbogenförmigen Vertiefung ein Unwuchtausgleichsmittel aufweist, das als kreisbogenförmige Aussparung ausgebildet ist, die weder mit der kreisbogenförmigen Vertiefung noch mit der Durchführungsöffnung durchgängig verbunden ist und die auf der Seite der Mantelseite der Steuerscheibe angeordnet ist, die der kreisbogenförmigen Vertiefung bezüglich der Mittelachse des Schaftabschnitts gegenüberliegt. Auf diese Weise lässt sich das Auftreten einer ausgeprägt ungleichmäßigen Massenverteilung der Drehbewegung vermeiden, die eine Unwucht zur Folge hat und somit eine hohe Belastung der Drehachsen sowie der Drehlager der Umlaufkörper darstellt. Unter Vermeidung einer solchen Unwucht lassen sich insgesamt höhere Drehgeschwindigkeiten realisieren.

Für alle vorgenannten Ausbildungen ist es zudem dienlich, wenn der Grundkörper ferner ein Planetengetriebe umfasst, das innerhalb des Grundkörpers angeordnet ist und das zur Drehung der Umlaufkörper abtriebsseitig in den Schaftabschnitt jedes Umlaufkörpers eingreift. Hierdurch lassen sich die unterschiedlichen Drehbewegungen des Grundkörpers, der Umlaufkörper sowie gegebenenfalls der Halteköpfe untereinander koppeln, wobei gleichzeitig eine zeitgleiche Drehbewegung und eine zuverlässige Kraftübertragung gewährleistet ist, die sich bei anderen Getriebeformen nicht auf derart einfache, zuverlässige und vor allem wartungsarme Weise verwirklichen lässt.

Darüber hinaus ist es von Vorteil, wenn der Ansaugkanal des Umlaufkörpers ausschließlich aus geraden Kanalabschnitten und/oder aus Kanalumlenkabschnitten mit einem Umlenkwinkel von weniger 90° gebildet wird. Auf diese Weise kann das Auftreten einer Verminderung des am Haltekopf herrschenden Unterdrucks verhindert werden, die infolge starker Umlenkung des Ansaugwegs innerhalb der Umlaufkörper als Ergebnis eines turbulenten Strömungsprofils entstehen kann. Dies ermöglicht also ebenfalls eine Erhöhung der an den Ansaugöffnungen wirkenden effektiven Ansaugkraft.

Die Durchlassöffnungen des Grundkörpers können zudem als radiale Öffnungen in der Mantelseite des Grundkörpers ausgebildet sein. Auf diese Weise lässt sich besonders einfach eine Verbindung zwischen der Durchlassöffnung des Grundkörpers und der Ansaugseite der Pumpeneinrichtung (dem Unterdruckaggregat) erzielen. Aus demselben Grund ist es sinnvoll, wenn die Fördervorrichtung einen Unterdruckverteiler umfasst, der einen mit einer Pumpeneinrichtung verbundenen Unterdruckabschnitt aufweist, der mit der Durchlassöffnung über eine konkave Schlitzöffnung, die sich in einem konkaven Mantelseitenabschnitt der Außenseite des Unterdruckverteilers befindet, verbindbar ist, wobei der Mantelseitenabschnitt die Mantelseite des Grundkörpers teilumfänglich oder vollumfänglich derart umgibt, dass bei einer Drehung des Grundkörpers um seine Mittelachse stets zumindest einige der radialen Öffnungen in der Mantelseite des Grundkörpers mit dem Unterdruckabschnitt des Unterdruckverteilers über die konkave Schlitzöffnung durchgängig verbunden sind. Umgibt der Mantelseitenabschnitt des Unterdruckverteilers die Mantelseite des Grundkörpers lediglich teilumfänglich, so kann über die Anordnung eine zusätzliche Steuerwirkung erzielt werden, die zwar üblicherweise weniger präzise ausfällt als die mittels der Steuerscheiben erzielte Steuerung, jedoch den insgesamt anliegenden Unterdruck ebenfalls etwas erhöhen kann.

Das Innenvolumen des Unterdruckabschnitts ist günstigenfalls größer als die Summe der Innenvolumina der Ansaugöffnungen und Ansaugkanäle derjenigen Umlaufkörper, die jeweils mit dem Unterdruckabschnitt durchgängig verbunden sind. Infolge dieser Ausbildung ist eine Windkesselfunktion gewährleistet, so dass der Druckabfall innerhalb des Unterdruckabschnitts beim Öffnen des Flächenventils (und damit beim Evakuieren des Ansaugkanals) besonders gering ausfällt und daher stabförmige Artikel an den Halteköpfen auch bei den Schaltvorgängen des Flächenventils zuverlässig gehalten werden.

Bei einer erfindungsgemäßen Fördervorrichtung kann der erste Transportstrom eine in Bezug auf die stabförmigen Artikel längsaxiale Förderrichtung und der zweite Transportstrom eine in Bezug auf die stabförmigen Artikel queraxiale Förderrichtung aufweisen, wobei der Längsförderer zur Übernahme von stabförmigen Artikeln, die dem Längsförderer längsaxial zugeführt werden, und zur Abgabe der stabförmigen Artikel in queraxiale Förderrichtung angepasst ist. Stattdessen kann aber auch der erste Transportstrom eine in Bezug auf die stabförmigen Artikel queraxiale Förderrichtung und der zweite Transportstrom eine in Bezug auf die stabförmigen Artikel längsaxiale Förderrichtung aufweisen, wobei der Längsförderer zur Übernahme von stabförmigen Artikeln, die dem Längsförderer queraxial zugeführt werden, und zur Abgabe der stabförmigen Artikel in längsaxiale Förderrichtung angepasst ist. Somit lässt sich mit derselben Vorrichtung je nach Betriebsrichtung ein Umlenken des Transportstroms sowohl aus längsaxialer Richtung in queraxiale Richtung als auch aus queraxialer Richtung in längsaxiale Richtung erreichen.

Sinnvollerweise umfasst die Fördervorrichtung weiterhin einen Querförderer, der eine in queraxialer Förderrichtung laufende gekrümmte Förderfläche mit einer Mehrzahl an Queraufnahmen für die stabförmigen Artikel aufweist. Dieser ist in besonderem Maße für das Zusammenspiel mit dem zuvor beschriebenen Längsförderer geeignet.

Gemäß einem weiteren Aspekt der vorliegenden Erfindung wird ein Verfahren zum Umleiten von stabförmigen Artikeln aus einem ersten Transportstrom in einen zweiten Transportstrom vorgeschlagen. Dieses Verfahren soll das konventionelle Verfahren dahingehend verbessern, dass es eine präzisere Steuerung des Ansaugens, Haltens und Freigeben der stabförmigen Artikel am Haltekopf bei gleichzeitig stärkerem Ansaugen insgesamt ermöglichen soll.

Diese Aufgabe wird durch ein Verfahren der eingangs genannten Art gelöst, bei dem entweder das Flächenventil geöffnet wird, indem bei der Drehbewegung des Umlaufkörpers eine Durchführungsöffnung im Umlaufkörper vor eine kreisbogenförmige Vertiefung im Grundkörper gebracht wird, und das Flächenventil geschlossen wird, indem die Durchführungsöffnung im Umlaufkörper von der kreisbogenförmigen Vertiefung im Grundkörper weg gedreht wird, oder das Flächenventil geöffnet wird, indem bei der Drehbewegung des Umlaufkörpers eine kreisbogenförmige Vertiefung im Umlaufkörper vor eine Durchlassöffnung im Grundkörper gebracht wird, und das Flächenventil geschlossen wird, indem die kreisbogenförmige Vertiefung des Umlaufkörpers von der Durchlassöffnung im Grundkörper weg gedreht wird. Infolge der direkten Kopplung der Drehbewegung des Umlaufkörpers relativ zum Grundkörper an das Öffnen und Schließen des Flächenventils wird eine hochgenaue Steuerung des Haltevorgangs erreicht, die bei den aus dem Stand der Technik bekannten Verfahren nicht möglich ist (bei denen das Öffnen und Schließen eines Ventils ausschließlich infolge der Drehung des Grundkörpers erfolgt). Bei jeder Vollkreisdrehung des Umlaufkörpers relativ zum Grundkörper kann hierbei das Flächenventil mindestens einmal geöffnet werden und demzufolge mindestens einmal geschlossen werden. Selbstverständlich muss die Anzahl der Öffnungsvorgänge gleich der Anzahl der Schließvorgänge sein. Die Vorteile der beiden alternativen, erfindungsgemäßen Verfahrensführungen ergeben sich aus den unterschiedlichen Ausgestaltungen der Flächenventile; diese sind obenstehend für die in den Grundkörper integrierten Steuerscheiben und für die als Teil der Umlaufkörper ausgebildeten Steuerscheiben beschrieben.

Sämtliche der vorstehend dargelegten Merkmale sind in Verbindung mit der erfindungsgemäßen Lehre einsetzbar und zur zusätzlichen Verbesserung der Erfindung geeignet. Darüber werden diese Merkmale auch für sich genommen als eigenständig erfinderisch angesehen.

Die vorliegende Erfindung ist also auf eine Vorrichtung zum Fördern von stabförmigen Artikeln gerichtet. Als stabförmige Artikel werden alle Artikel beliebigen Querschnitts angesehen, deren Längenausdehnung in einer Raumrichtung (der Hauptachse des stabförmigen Artikels) größer ist als in den beiden anderen Raumrichtungen. Als stabförmige Artikel im Sinne der vorliegenden Erfindung werden insbesondere solche der Tabak verarbeitenden Industrie verstanden, beispielsweise Tabakstöcke oder Filterstäbe.

Ein Transport dieser stabförmigen Artikel kann grundsätzlich zwei unterschiedliche Richtungskomponenten aufweisen, nämlich eine Bewegung in Richtung längs der Hauptachse des Artikels (längsaxialer Bewegungsanteil, was ebenfalls eine Bewegung parallel zur Hauptachse einschließt) und eine Bewegung quer zur Hauptachse des Artikels (queraxialer Bewegungsanteil). Überwiegen die längsaxialen Bewegungsanteile bei einem Transport der stabförmigen Artikel, so liegt eine längsaxiale Förderrichtung, wohingegen dann, wenn die queraxialen Bewegungsanteile überwiegen, eine queraxiale Förderrichtung gegeben ist.

Wird eine Vielzahl an stabförmigen Artikeln in längsaxiale Förderrichtung transportiert, so liegen die Artikel in einem längsaxialen Transportstrom (Produktstrom) vor; im Falle einer geordneten Anordnung der Artikel im Transportstrom kann dies beispielsweise in Form eines endlosen oder unterbrochenen Einzel- oder Mehrfachstrangs erfolgen, etwa eines Doppelstrangs. Entsprechend wird beim Transport einer Vielzahl an stabförmigen Artikeln in queraxiale Förderrichtung ein queraxialer Transportstrom erhalten, bei einer geordneten Anordnung der Artikel im Transportstrom zum Beispiel ein queraxialer Strom parallel ausgerichteter Artikel.

Die erfindungsgemäße Fördervorrichtung ist zum Umleiten der stabförmigen Artikel aus einem ersten Transportstrom in einen zweiten Transportstrom eingerichtet, wobei der eine der beiden Transportströme eine in Bezug auf die stabförmigen Artikel längsaxiale Förderrichtung aufweist und der andere der beiden Transportströme eine in Bezug auf die stabförmigen Artikel queraxiale Förderrichtung aufweist. Demzufolge kann die Fördervorrichtung also entweder einen der Vorrichtung zugeführten längsaxialen Transportstrom in einen queraxialen Transportstrom umlenken oder auch einen der Vorrichtung zugeführten queraxialen Transportstrom in einen längsaxialen Transportstrom umlenken.

Die Fördervorrichtung weist hierbei zumindest einen Längsförderer auf, der im Folgenden näher beschrieben ist. Zusätzlich zu dem Längsförderer kann die Fördervorrichtung natürlich auch weitere Elemente aufweisen, etwa einen zu dem Längsförderer korrespondierend ausgebildeten Querförderer, der entweder einen der Vorrichtung zugeführten queraxialen Transportstrom dem Längsförderer zuführt oder aber einen in queraxiale Förderrichtung umgelenkten Transportstrom von dem Längsförderer weg führt. Derartige Querförderer können beliebig geeignet ausgebildet sein, also beispielsweise eine in queraxialer Förderrichtung umlaufende Trommel umfassen, deren Außenmantel als gekrümmte Förderfläche dient, die dabei eine Mehrzahl an Queraufnahmen für die stabförmigen Artikel aufweist.

Erfindungsgemäß ist ein Längsförderer vorgesehen, der einen Grundkörper und eine Mehrzahl an Umlaufkörpern aufweist. Der Grundkörper ist für eine Drehbewegung um seine Mittelachse (also eine Rotation um eine Drehachse) drehbar gelagert. Als Grundkörper wird vorliegend jede Einrichtung bezeichnet, die als Basis für die Umlaufkörper dient. Der Grundkörper kann prinzipiell beliebig geeignet ausgestaltet sein, wobei üblicherweise eine Geometrie bevorzugt ist, die eine bezüglich der Mittelachse zumindest annähernd symmetrische Massenverteilung ermöglicht, so dass die Mittelachse mit der stabilen Hauptträgheitsachse des Grundkörpers übereinstimmen kann (und der Grundkörper daher keine Unwucht aufweist). Üblicherweise besitzt der Grundkörper eine Form, die sich von der Grundform eines Rads, einer Trommel, einer Walze, eines Hohlzylinders, eines Vollzylinders oder dergleichen ableiten lässt.

Der Grundkörper weist eine Mehrzahl an Durchlassöffnungen auf. Als Durchlassöffnung eines Grundkörpers wird jede Öffnung verstanden, die infolge ihrer Geometrie, Lage und Ausbildung als Durchlass eines Fluids (in diesem Fall des abzusaugenden Gases) durch den Grundkörper dient. Insbesondere können die Durchlassöffnungen des Grundkörpers als Öffnungen in der Mantelseite des Grundkörpers ausgebildet sein, die radial oder schräg radial verlaufen.

Für die Ausbildung der Durchlassöffnungen als radiale Öffnungen kann die Fördervorrichtung weiterhin einen Unterdruckverteiler umfassen, also eine Einrichtung zum Verteilen eines von außen eingebrachten Unterdrucks (der beispielsweise über eine Vakuumpumpe oder einen Seitenkanalverdichter erzeugt werden kann) an die Ansaugleitungen des Längsförderers. Der Unterdruckverteiler weist einen mit einer Pumpeneinrichtung verbundenen Unterdruckabschnitt auf (ein Volumen, an dem im Betrieb permanent ein Unterdruck anliegt, das heißt ein gegenüber der Umgebung geringerer Druck). Der Unterdruckabschnitt ist mit der Durchlassöffnung des Grundkörpers über eine konkave Schlitzöffnung des Unterdruckverteilers verbindbar ausgebildet. Die Schlitzöffnung ist hierbei konkav ausgebildet, indem diese in einem konkaven Mantelseitenabschnitt der Außenseite des Unterdruckverteilers angeordnet ist. Die konkave Wölbung des Mantelseitenabschnitts der Außenseite des Unterdruckverteilers ist hierbei der konvexen Wölbung der Mantelseite des Grundkörpers entsprechend gewählt. Daher umgibt der Mantelseitenabschnitt der Außenseite des Unterdruckverteilers die Mantelseite des Grundkörpers derart teilumfänglich oder vollumfänglich, dass bei einer Drehung des Grundkörpers um seine Mittelachse stets zumindest einige der radialen Öffnungen in der Mantelseite des Grundkörpers mit dem Unterdruckabschnitt des Unterdruckverteilers über die konkave Schlitzöffnung durchgängig verbunden sind. Die Durchlassöffnung des Grundkörpers, die sich innerhalb des Bereichs des konkaven Schlitzes befinden, sind hierbei mit dem Unterdruck beaufschlagt. Wenngleich der Unterdruckverteiler und der Unterdruckabschnitt grundsätzlich beliebig geeignet ausgebildet sein können, so kann jedoch insbesondere das Innenvolumen des Unterdruckabschnitts größer gewählt werden als das Volumen derjenigen Ansaugleitungen innerhalb des Umlaufkörpers, die jeweils gleichzeitig mit dem Unterdruckabschnitt durchgängig verbunden sind und damit größer sein als die Summe der Innenvolumina der Ansaugöffnungen und der Ansaugkanäle derjenigen Umlaufkörper, die jeweils mit dem Unterdruckabschnitt durchgängig verbunden sind.

Als Umlaufkörper wird vorliegend jede Einrichtung bezeichnet, die mit dem Grundkörper derart verbunden ist, dass die Einrichtung beim Drehen des Grundkörpers um seine Mittelachse mit dem Grundkörper umläuft und so an dem Grundkörper eine definierte Bahnbewegung ausführt. Jeder Grundkörper ist somit für eine Umlaufbewegung auf einer definierten Umlaufbahn bei der Drehbewegung des Grundkörpers um die Mittelachse des Grundkörpers angepasst. Jeder Umlaufkörper weist einen Schaftabschnitt, einen Ansaugkanal und mindestens einen Haltekopf auf. Dabei kann die konkrete Ausgestaltung des Umlaufkörpers grundsätzlich beliebig sein. So kann der Umlaufkörper beispielsweise die Grundform einer mit einem Schaft versehenen Gondel mit Ausleger oder die Grundform eines Kurbelelements besitzen.

Der Schaftabschnitt jedes Umlaufkörpers ist ein länglicher Abschnitt am hinteren Ende des Umlaufkörpers. Der Schaftabschnitt ist in dem Grundkörper derart gelagert, dass der Schaftabschnitt (und damit auch der Umlaufkörper) um die Mittelachse des Schaftabschnitts drehbar ist. Demzufolge kann der hülsenartige Außenmantel des Schaftabschnitts (also dessen Außenseite) zumindest teilweise als Welle ausgebildet sein.

Der Haltekopf ist eine Unterbaugruppe am vorderen Ende des Umlaufkörpers, die zum Halten der stabförmigen Artikel eingerichtet ist. (Im Rahmen der Beschreibung der vorliegenden Erfindung werden die Begriffe "vorne" und "hinten" eingesetzt, um relative Positionen an dem Längsförderer zu unterscheiden, so dass "vorne" eine Anordnung bezeichnet, die näher am haltekopfseitigen Ende der Vorrichtung gelegen ist, und "hinten" eine Anordnung benennt, die vom haltekopfseitigen Ende der Vorrichtung weiter entfernt gelegen ist; die Begriffe dienen jedoch nicht dazu, die absolute Lage der Elemente im Raum oder deren absolute Ausrichtung zu beschreiben, so dass das vordere Ende durchaus auch räumlich über oder sogar hinter dem hinteren Ende angeordnet sein kann.)

Der Haltekopf weist eine oder mehrere Ansaugöffnungen auf, über die die stabförmigen Artikel an den Haltekopf angesaugt und somit gehalten werden können. Grundsätzlich kann der Haltekopf beliebig geeignet ausgebildet sein, zum Beispiel als Einfachhaltekopf oder Mehrfachhaltekopf, etwa als Zweierschuh. Der Haltekopf kann mit dem Rest des Umlaufkörpers ebenfalls drehbar verbunden sein, wobei eine Drehbewegung dann beispielsweise über ein Getriebe bewirkt werden kann, das etwa innerhalb des Umlaufkörpers angeordnet ist.

Die Ansaugöffnungen können eine beliebige Geometrie aufweisen, beispielsweise als Schlitze oder Kreisbohrungen. Im Innern des Umlaufkörpers gehen alle Ansaugöffnungen eines Umlaufkörpers in einen Ansaugkanal über, so dass die Ansaugöffnungen den einen Endbereich des Ansaugkanals darstellen (erster Endbereich). Die Ansaugöffnung ist also mit dem Ansaugkanal durchgängig (das heißt kommunizierend) verbunden.

Der Ansaugkanal ist eine Unterdruckleitung, die in dem Umlaufkörper angeordnet ist und über die ein Unterdruck zum Ansaugen der stabförmigen Artikel am Haltekopf bereitgestellt wird. Ein Ansaugkanal kann eine oder mehrere Kanalröhren umfassen, die miteinander verbunden oder separat in dem Umlaufkörper angeordnet sein können. Der Unterdruck wird extern von einer Pumpeneinrichtung als Unterdruckaggregat erzeugt, die mit dem anderen Endbereich des Ansaugkanals (zweiter Endbereich) über eine kreisbogenförmige Vertiefung in einer Steuerscheibe und jeweils eine Durchlassöffnung im Grundkörper sowie gegebenenfalls über weitere externe Unterdruckleitungen verbunden ist.

Die Verbindung des zweiten Endbereichs des Ansaugkanals mit der Durchlassöffnung des Grundkörpers ist hierbei nicht permanent durchgängig, sondern lediglich durchgängig verbindbar ausgebildet. Dies bedeutet, dass sich zwischen dem zweiten Endbereich des Ansaugkanals und der Durchlassöffnung ein Steuerventil befindet, dessen Öffnen und Schließen den Unterdruck am Haltekopf bereitstellt und steuert, wodurch das Ansaugen und Ablösen der stabförmigen Artikel bestimmt wird.

Erfindungsgemäß weist der Längsförderer eine Vielzahl an Steuerscheiben auf, wobei jedem Umlaufkörper eine Steuerscheibe zugeordnet ist. Demzufolge ist die Anzahl der Steuerscheiben des Längsförderers genau so groß wie die Anzahl der Umlaufkörper. Jede Steuerscheibe ist an zumindest einem Teil des Schaftabschnitts (oder am gesamten Schaftabschnitt) vorgesehen. Die Steuerscheibe ist dazu eingerichtet, die Durchgängigkeit der Verbindung zwischen dem zweiten Endbereich des Ansaugkanals des Umlaufkörpers und der Durchlassöffnung des Grundkörpers zu steuern, wobei die Steuerung bei der Drehung des Umlaufkörpers um die Mittelachse des Schaftabschnitts erfolgt. Demnach ist jede Steuerscheibe eingerichtet, die Verbindung zwischen dem zweiten Endbereich des Ansaugkanals und der Durchlassöffnung bei einer Drehung des Umlaufkörpers um die Mittelachse seines Schaftabschnitts mindestens einmal zu öffnen und mindestens einmal zu schließen, wobei im Verlauf einer einzigen Umdrehung des Umlaufkörpers natürlich auch mehrere gleiche oder unterschiedliche Öffnen-Schließen-Zyklen durchlaufen werden können, wobei jeder Öffnungsphase dann eine eigene kreisbogenförmige Vertiefung zugeordnet sein kann.

Die Steuerscheibe weist eine kreisbogenförmige Vertiefung auf, die als Kreisbogen ausgebildet ist. Der Kreisbogen wiederum stellt einen Teil eines Vollkreises dar, der bezüglich der Mittelachse des Schaftabschnitts zumindest im Wesentlichen konzentrisch ist. Der Kreisbogen wird aus dem Vollkreis von zwei Radien herausgeschnitten, zwischen denen ein bestimmter Winkel auftritt (der Mittelpunktswinkel des Kreisbogens). Erfindungsgemäß ist dieser Mittelpunktswinkel kleiner als 360 °, so dass bei jeder Vollkreisdrehung des Umlaufkörpers um die Mittelachse des Schaftabschnitts mindestens ein Öffnen-Schließen-Zyklus durchlaufen wird.

Dies setzt zudem voraus, dass die kreisbogenförmige Vertiefung derart ausgebildet ist (etwa hinsichtlich ihrer Lage und Geometrie), dass der Ansaugkanal des Umlaufkörpers bei jeder Vollkreisdrehung des Umlaufkörpers um die Mittelachse des Schaftabschnitts über die kreisbogenförmige Vertiefung der Steuerscheibe mit der jeweiligen Durchlassöffnung des Grundkörpers für einen bestimmten Drehwinkelbereich durchgängig verbunden ist. Dieser definierte Drehwinkelbereich entspricht dabei dem Mittelpunktswinkel des Kreisbogens. Demzufolge ist der Ansaugkanal des Umlaufkörpers gegenüber der jeweiligen Durchlassöffnung des Grundkörpers für einen Drehwinkel abgesperrt, der einem Winkel von 360° abzüglich des Mittelpunktswinkels des Kreisbogens entspricht. Bei mehreren Öffnen-Schließen-Zyklen gilt dementsprechend als Mittelpunktswinkel des Kreisbogens die Summe der Mittelpunktswinkel aller kreisbogenförmigen Vertiefungen.

Die Steuerscheibe kann mit anderen Worten auch als Teil eines Flächenventils beschrieben werden, das bei einer Drehung des Umlaufkörpers relativ zum Grundkörper eine Unterdruckleitung abwechselnd öffnet und verschließt, die sich von dem Umlaufkörper in einen zugeordneten Bereich des Grundkörpers erstreckt. Das Flächenventil weist als Absperrkörper dabei eine erste Ventilfläche und eine zweite Ventilfläche auf, deren relative Lage zueinander die Durchgängigkeit des Ventils bestimmt. Die erste Ventilfläche weist einen ersten flächigen Dichtbereich und eine Durchgangsöffnung auf, und die zweite Ventilfläche weist einen zweiten flächigen Dichtbereich und eine kreisbogenförmige Vertiefung mit einem Mittelpunktswinkel von weniger als 360° auf.

Die eine dieser beiden Ventilflächen bildet dabei einen Teil des Grundkörpers, und die andere der beiden Ventilfläche bildet einen Teil des Umlaufkörpers. Überdies sind beide Ventilflächen relativ zueinander derart bewegbar, dass bei einer Drehbewegung des Umlaufkörpers relativ zum Grundkörper die eine Ventilfläche alternierend an der anderen Ventilfläche entlang bewegt wird. Dadurch ist die Durchgangsöffnung in einer kommunizierenden Verbindung mit der kreisbogenförmigen Vertiefung zunächst durchgängig verbunden, anschließend werden die Durchgangsöffnung und die kreisbogenförmige Vertiefung dann von der Dichtfläche der jeweils anderen Ventilfläche abgedichtet. Da beide Ventilflächen auf geringes Spaltmaß gefertigt sind, sind weitere Dichtungsmittel nicht erforderlich.

Im Rahmen dieser alternativen Beschreibung kann der Längsförderer dadurch näher spezifiziert werden, dass der Grundkörper eine Mehrzahl an Durchlassöffnungen umfasst, von denen jede Durchlassöffnung einen Teil der jeweiligen Unterdruckleitung bildet, wohingegen jeder der Umlaufkörper einen Schaftabschnitt, einen Ansaugkanal und mindestens einen Haltekopf umfasst. Der Schaftabschnitt ist hierbei in dem Grundkörper um die Mittelachse des Schaftabschnitts drehbar gelagert und ermöglicht so die Drehung des Umlaufkörpers relativ zum Grundkörper. Der Haltekopf weist wenigstens eine Ansaugöffnung auf und ist zum Halten von wenigstens einem stabförmigen Artikel mittels Unterdruck an der wenigstens einen Ansaugöffnung angepasst. Der Ansaugkanal ist als Teil der Unterdruckleitung ausgebildet und weist an seinem einen Ende einen ersten Endbereich und an seinem anderen Ende einen zweiten Endbereich auf. Der erste Endbereich ist mit der wenigstens einen Ansaugöffnung des Haltekopfs durchgängig verbunden, und der zweite Endbereich ist mit jeweils einer Durchlassöffnung des Grundkörpers durchgängig verbindbar ausgebildet. Ferner ist jedem Umlaufkörper eine Steuerscheibe zugeordnet, die zum Steuern der Durchgängigkeit der Unterdruckleitung bei einer Drehung des Umlaufkörpers um die Mittelachse des Schaftabschnitts eingerichtet ist. Die Steuerscheibe weist hierbei die kreisbogenförmige Vertiefung der zweiten Ventilfläche auf, die auf einem bezüglich der Mittelachse des Schaftabschnitts zumindest im Wesentlichen konzentrischen Vollkreis angeordnet ist. Darüber hinaus ist die kreisbogenförmige Vertiefung derart ausgebildet, dass bei jeder Vollkreisdrehung des Umlaufkörpers um die Mittelachse des Schaftabschnitts der Ansaugkanal des Umlaufkörpers über die Vertiefung der Steuerscheibe mit der jeweiligen Durchlassöffnung des Grundkörpers für einen Drehwinkelbereich durchgängig verbunden ist, der dem Mittelpunktswinkel des Kreisbogens entspricht, und dass der Ansaugkanal des Umlaufkörpers gegenüber der jeweiligen Durchlassöffnung des Grundkörpers für einen Drehwinkel abgesperrt ist, der einem Winkel von 360° abzüglich des Mittelpunktswinkels des Kreisbogens entspricht. Diese alternative Beschreibung des erfindungsgemäß einzusetzenden Längsförderers ist vollständig gleichwertig zu der obenstehend aufgeführten Beschreibung.

Die Steuerscheiben (Steuerkörper) können erfindungsgemäß grundsätzlich beliebig geeignet ausgebildet sein. Unter der Vielzahl an möglichen Ausbildungen haben sich jedoch zwei unterschiedliche Anordnungen als besonders praktisch herausgestellt: Bei der ersten Anordnung ist die Steuerscheibe integraler Bestandteil des Grundkörpers, so dass sich der Umlaufkörper in einem inneren Ringloch der Steuerscheibe dreht, wohingegen bei der zweiten Anordnung die Steuerscheibe mit dem Umlaufkörper drehfest verbunden ist, so dass sich der Schaftabschnitt zusammen mit der Steuerscheibe im Grundkörper dreht.

Gemäß der ersten Anordnung sind die Steuerscheiben in den Grundkörper integriert. Dies kann dadurch erfolgen, dass die Steuerscheiben mit einem Teil des Grundkörpers einstückig ausgebildet sind, etwa als stirnseitige Abdeckung eines Trommelkörpers (also als eine der beiden Grundflächen einer solchen Trommel). Überdies sind jedoch auch andere Realisierungen dieser ersten Anordnung möglich, beispielsweise solche, in denen die Steuerscheiben separat von dem Grundkörper ausgebildet sind, mit diesem jedoch drehfest verbunden sind (also in diesen fest und somit nicht-drehbar eingelassen sind).

So kann der Grundkörper als Trommelwalze mit zwei Grundseiten und einer Mantelseite ausgebildet sein. Die eine Grundseite der Trommelwalze (nämlich die Seite, mit der die Umlaufkörper drehbar verbunden sind) weist eine Mehrzahl an Drehlageröffnungen auf, die als Lager der Schaftabschnitte der Umlaufkörper ausgebildet sind. Natürlich kann die Trommelwalze zusätzlich auch noch weitere Lager für die Schaftabschnitte aufweisen, etwa im Innern der Trommelwalze oder an ihrer zweiten Grundseite.

Bei dieser besonderen Ausbildung der ersten Anordnung ist jede Steuerscheibe als kreisringförmiger Bereich der Grundseite der Trommelwalze ausgebildet. Dieser kreisringförmige Bereich umfasst zwei Ringgrundseiten (die Grundflächen des Kreisrings), die jeweils eine der Kreisöffnungen (die Öffnung im Innern des Rings) konzentrisch umgeben. Eine dieser beiden Ringgrundseiten weist dabei eine erste Dichtfläche und die kreisbogenförmige Vertiefung auf, die mit der jeweiligen Durchlassöffnung des Grundkörpers durchgängig (und somit drehfest) verbunden ist. Die übrigen Bestandteile des Längsförderers können hierbei beliebig geeignet ausgebildet sein.

Da die kreisbogenförmige Vertiefung einen Teil des Unterdruckleitungssystems darstellt, sollte diese nach außen hin abgedichtet und somit verschlossen sein. Dies lässt sich besonders einfach durch eine Kragenscheibe erreichen, also eine Scheibe, die kragenförmig um den Schaftabschnitt des Umlaufkörpers angeordnet ist und die auf diese Weise die kreisbogenförmige Vertiefung abdeckt. Hierzu weist die Kragenscheibe eine zweite Dichtfläche sowie eine Durchführungsöffnung auf, die beide mit der der ersten Dichtfläche korrespondierenden. Die Durchführungsöffnung dient als Durchführung in der Kragenscheibe und bildet den zweiten Endbereich des Ansaugkanals. Damit eine hinreichende Verschlusswirkung erzielt werden kann, ist in Radialrichtung der mittlere Abstand der Durchführungsöffnung von der Mittelachse des Schaftabschnitts zumindest in etwa so groß ist wie der mittlere Abstand der kreisbogenförmigen Vertiefung von dem Mittelpunkt der Drehlageröffnung.

Gemäß der zweiten Anordnung ist die Steuerscheibe mit dem Umlaufkörper drehfest verbunden, so dass sich der Schaftabschnitt zusammen mit der Steuerscheibe in einer entsprechenden Aufnahme des Grundkörpers dreht. Somit ist jede Steuerscheibe also als Teil des zugeordneten Umlaufkörpers ausgebildet.

Dies kann durch grundsätzlich jede geeignete Ausgestaltung erreicht werden. Insbesondere kann hierfür eine Steuerscheibe zum Einsatz kommen, die eine mit dem Umlaufkörper drehfest verbundene Ringscheibe ist, die eine äußere Mantelseite (die Außenseite des Ringes), eine innere Mantelseite (die Innenseite der Öffnung des Ringes) und zwei Ringgrundseiten aufweist. Die innere Mantelseite umgibt einen Teilbereich des Schaftabschnitts des Umlaufkörpers. Die äußere Mantelseite ist hierbei als erste Dichtfläche ausgebildet und weist die kreisbogenförmige Vertiefung auf, die auf einem Teilkreis eines Vollkreises angeordnet ist, der zum Umfang der äußeren Mantelseite (und somit ebenfalls zum Umfang des Ringlochs) zumindest im Wesentlichen parallel verläuft. Die kreisbogenförmige Vertiefung bildet hierbei den zweiten Endbereich des Ansaugkanals. Eine der beiden Ringgrundseiten weist überdies eine Durchführungsöffnung auf, die einen Teil des Ansaugkanals des Umlaufkörpers bildet und die mit der kreisbogenförmigen Vertiefung durchgängig verbunden ist. Dabei sind die Steuerscheibe und der Umlaufkörper üblicherweise voneinander lösbar ausgebildet. Für den Fall, dass die Steuerscheibe im Betrieb großen Belastungen ausgesetzt ist, kann diese natürlich auch mit dem Umlaufkörper einstückig ausgebildet sein.

Der Grundkörper kann ebenfalls beliebig geeignet ausgestaltet sein. So kann dieser insbesondere als Trommelwalze mit zwei Grundseiten und einer Mantelseite ausgebildet sein. Die eine Grundseite der Trommelwalze weist eine Mehrzahl an Drehlageröffnungen auf, die als Lager der Schaftabschnitte der Umlaufkörper ausgebildet sind. Jede Drehlageröffnung geht in eine Aufnahmevertiefung über, die als Aufnahme für eine Steuerscheibe dient. Die Aufnahmevertiefung weist eine mit der ersten Dichtfläche korrespondierende zweite Dichtfläche sowie die Durchlassöffnung auf. Demgemäß ist jeder Umlaufkörper derart in der entsprechenden Drehlageröffnung angeordnet, dass in axialer Richtung der mittlere Abstand der kreisbogenförmigen Vertiefung von den Ringgrundseiten der Steuerscheibe zumindest in etwa so groß ist wie der mittlere Abstand der Durchlassöffnung von den Ringgrundseiten der Steuerscheibe.

Aufgrund der kreisbogenförmigen Vertiefung weist die Steuerscheibe eine bezüglich der Schaftmittelachse inhomogene Massenverteilung auf, die zu einer Unwucht führt. Um eine derartige Unwucht zu vermeiden, kann die äußere Mantelseite der Steuerscheibe (oder gegebenenfalls deren Ringgrundseiten) zusätzlich zu der kreisbogenförmigen Vertiefung ein Unwuchtausgleichsmittel aufweisen. Das Unwuchtausgleichsmittel ist hier eine kreisbogenförmige Aussparung, die weder mit der kreisbogenförmigen Vertiefung noch mit der Durchführungsöffnung durchgängig verbunden ist (also von der kreisbogenförmigen Vertiefung und von der Durchführungsöffnung abgetrennt vorliegt). Die kreisbogenförmige Aussparung ist auf der Seite der Mantelseite der Steuerscheibe angeordnet, die der kreisbogenförmigen Vertiefung bezüglich der Mittelachse des Schaftabschnitts gegenüberliegt.

Die erfindungsgemäße Fördervorrichtung (einschließlich deren erste und zweite Anordnung) kann darüber hinaus innerhalb des Grundkörpers ein Planetengetriebe aufweisen. Dieses Planetengetriebe greift zur Drehung der Umlaufkörper abtriebsseitig (also über die Getrieberäder, die die von dem Planetengetriebe eingebrachte Leistung an die Umlaufkörper abgeben) in den Schaftabschnitt jedes Umlaufkörpers ein, also etwa in ein Zahnrad oder einen Zahnkranz, der auf dem Außenmantel des Schaftabschnitts befestigt ist.

Jeder Umlaufkörper weist einen Ansaugkanal auf. Auch wenn der Ansaugkanal des Umlaufkörpers grundsätzlich beliebig ausgebildet sein kann, so ist es insbesondere sinnvoll, dass dieser ausschließlich aus geraden Kanalabschnitten und/oder aus Kanalumlenkabschnitten mit einem Umlenkwinkel von weniger 90° gebildet wird. Der Umlenkwinkel beschreibt den Winkel, um den ein gerader Kanalabschnitt umgelenkt werden muss, um die gewünschte Geometrie zu erreichen; so hat ein gerader Kanalabschnitt, dessen Enden einen Winkel von 180 ° bilden, einen Umlenkwinkel von 0 °. Demzufolge bildet ein Kanalumlenkabschnitt, der um einen Winkel umgelenkt ist, der weniger als 90 ° beträgt, also einen stumpfen Winkel.

Mit der erfindungsgemäßen Fördervorrichtung lässt sich insbesondere ein Verfahren zum Umleiten von stabförmigen Artikeln aus einem ersten Transportstrom in einen zweiten Transportstrom realisieren, wobei der eine der beiden Transportströme eine in Bezug auf die stabförmigen Artikels längsaxiale Förderrichtung aufweist, und der andere der beiden Transportströme eine in Bezug auf die stabförmigen Artikel queraxiale Förderrichtung, die quer zur längsaxialen Förderrichtung verläuft, aufweist. Dieses Verfahren umfasst die folgenden Schritte:
a) In einem ersten Transportstrom wird zumindest ein stabförmiger Artikel einem Längsförderer zugeführt, so dass der zumindest eine stabförmige Artikel in die Nähe einer Ansaugöffnung eines Haltekopf eines Umlaufkörpers gelangt, der drehbar an einem seinerseits drehbaren Grundkörper des Längsförderers gelagert ist.
b) Der zumindest eine stabförmige Artikel wird mittels Unterdruck an die Ansaugöffnung angesaugt.
c) Der Grundkörper des Längsförderers wird in einer ersten Drehrichtung gedreht, und der Umlaufkörper wird gleichzeitig gegenüber dem Grundkörper in einer zweiten Drehrichtung, die der ersten Drehrichtung entgegengesetzt ist, gedreht, wobei der zumindest eine stabförmige Artikel mittels Unterdruck an dem Haltekopf des Umlaufkörpers gehalten wird, bis eine Löseposition erreicht ist.
d) In der Löseposition wird der an dem Haltekopf gehaltene zumindest eine stabförmige Artikel von der Ansaugöffnung abgelöst.
e) Der zumindest eine stabförmige Artikel wird in einen zweiten Transportstrom weitergeleitet.

Die Schritte b), c) und d) werden erfindungsgemäß so durchgeführt, dass das Ansaugen und das Ablösen des zumindest einen stabförmigen Artikels durch das Öffnen (für das Ansaugen) bzw. Schließen (für das Ablösen) eines Flächenventils gesteuert wird, wobei das Flächenventil während des Haltens des zumindest einen stabförmigen Artikels geöffnet ist. Das Öffnen und Schließen des Flächenventils wird durch eine Drehbewegung des Umlaufkörpers relativ zum Grundkörper erreicht, was insbesondere bei Verwendung der obenstehend beschriebenen Kombination aus Grundkörper und Umlaufkörper mit zugeordneten Steuerscheiben möglich ist. Das Verfahren kann etwa derart durchgeführt werden, dass das Flächenventil bei jeder Vollkreisdrehung des Umlaufkörpers relativ zum Grundkörper einmal geöffnet wird und einmal geschlossen wird. Dieses Verfahren kann dem jeweils einzuhaltenden Verfahrensrahmen entsprechend gegebenenfalls um weitere Schritte ergänzt werden.

Gemäß einem Verfahren für die oben beschriebene erste Anordnung wird das Flächenventil geöffnet, indem bei der Drehung des Umlaufkörpers eine Durchführungsöfmung im Umlaufkörper vor eine kreisbogenförmige Vertiefung im Grundkörper (nämlich in einer mit dem Grundkörper integral ausgebildeten Steuerscheibe) gebracht wird. Das Flächenventil wird dann geschlossen, indem die Durchführungsöffnung im Umlaufkörper von der kreisbogenförmigen Vertiefung im Grundkörper weg gedreht wird.

Gleichsam kann entsprechend einem Verfahren für die oben beschriebene erste Anordnung das Flächenventil geöffnet werden, indem bei der Drehung des Umlaufkörpers eine kreisbogenförmige Vertiefung im Umlaufkörper (nämlich in einer mit dem Umlaufkörpers drehfest verbundenen Steuerscheibe) vor eine Durchlassöffnung im Grundkörper gebracht wird. Das Flächenventil wird dementsprechend geschlossen, indem die kreisbogenförmige Vertiefung des Umlaufkörpers von der Durchlassöffnung im Grundkörper weg gedreht wird.

Die Erfindung soll im folgenden unter Bezugnahme auf die beigefügten Zeichnungen, die besonders vorteilhafte Ausführungsbeispiele zeigen, ohne Beschränkung des allgemeinen Erfindungsgedankens näher beschrieben werden, woraus sich ferner weitere Vorteile und Anwendungsmöglichkeiten ergeben.
Fig. 1 zeigt einen Ausschnitt aus einer Schnittdarstellung eines konventionellen Längsförderers.
Fig. 2 zeigt perspektivische Darstellungen eines Längsförderers gemäß einer ersten Ausführungsform der vorliegenden Erfindung. In Fig. 2A und Fig. 2B ist jeweils ein Grundkörper mit Umlaufkörpern einschließlich der Halteköpfe und der stabförmigen Artikel dargestellt, wobei in Fig. 2A der Grundkörper mit einer mantelseitigen Abdeckung gezeigt ist, die in Fig. 2B nicht wiedergegeben ist.
Fig. 3 zeigt eine perspektivische Darstellung eines Umlaufkörpers gemäß der ersten Ausführungsform der vorliegenden Erfindung.
Fig. 4 zeigt weitere Darstellungen des in Fig. 3 abgebildeten Umlaufkörpers gemäß der ersten Ausführungsform der vorliegenden Erfindung. In Fig. 4A ist der Umlaufkörper als Vorderansicht und in Fig. 4B als Vollschnitt gezeigt.
Fig. 5 zeigt eine perspektivische Darstellung einer Grundseite des Grundköpers mit integrierten Steuerscheiben gemäß der ersten Ausführungsform der vorliegenden Erfindung.
Fig. 6 zeigt eine perspektivische Darstellung eines Umlaufkörpers mit einer daran befestigten Steuerscheibe gemäß einer zweiten Ausführungsform der vorliegenden Erfindung.
Fig. 7 zeigt einen Ausschnitt aus einer Schnittdarstellung des in Fig. 6 abgebildeten Umlaufkörpers in einem Grundkörper gemäß der zweiten Ausführungsform der vorliegenden Erfindung.
Fig. 8 zeigt eine perspektivische Darstellung der Steuerscheibe gemäß der zweiten Ausführungsform der vorliegenden Erfindung.
Fig. 9 zeigt eine perspektivische Darstellung einer Grundseite des Grundköpers gemäß der zweiten Ausführungsform der vorliegenden Erfindung.
Fig. 10 zeigt die Schnittdarstellung einer Grundseite des Grundköpers mit Umlaufkörpern und Steuerscheiben gemäß der zweiten Ausführungsform der vorliegenden Erfindung.
Fig. 11 gibt eine vergleichende Übersicht der in Fig. 1 (Fig. 11A) und Fig. 7 (Fig. 11B) gezeigten Schnittdarstellungen sowie einen Ausschnitt aus einer Schnittdarstellung des in Fig. 3 dargestellten Umlaufkörpers in einem Grundkörper gemäß der ersten Ausführungsform der vorliegenden Erfindung (Fig. 11C) wieder.

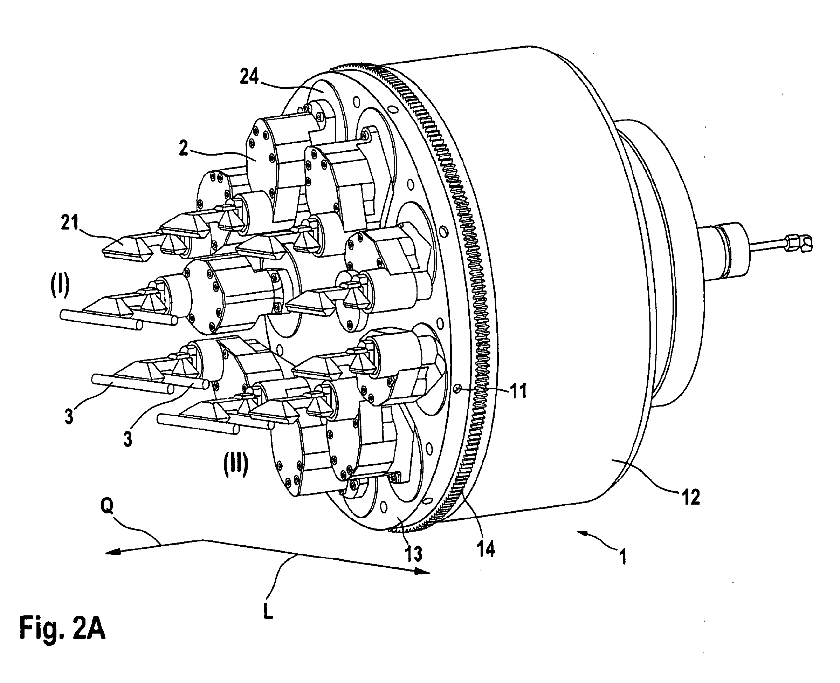

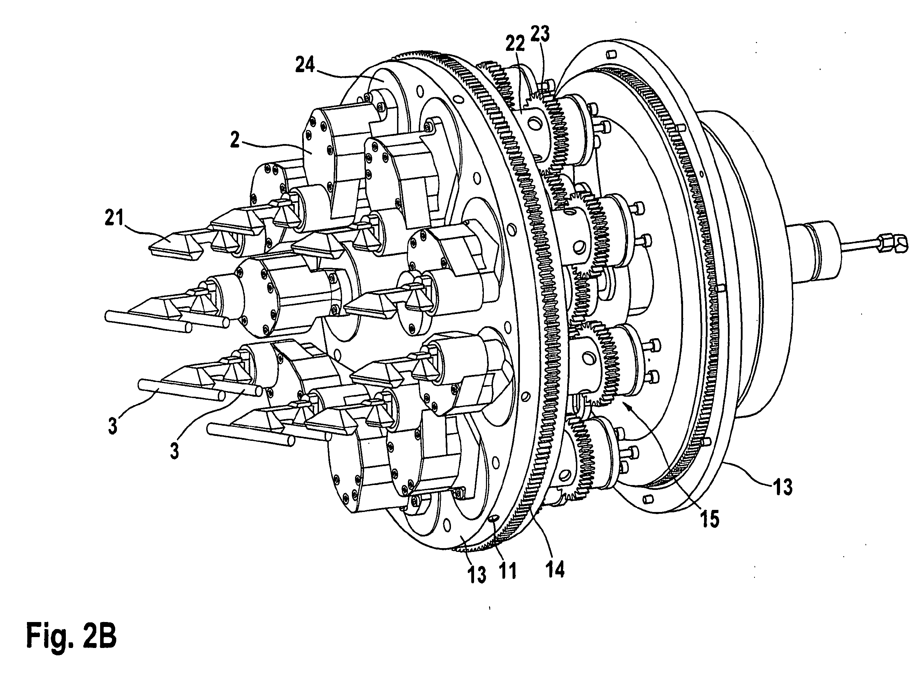

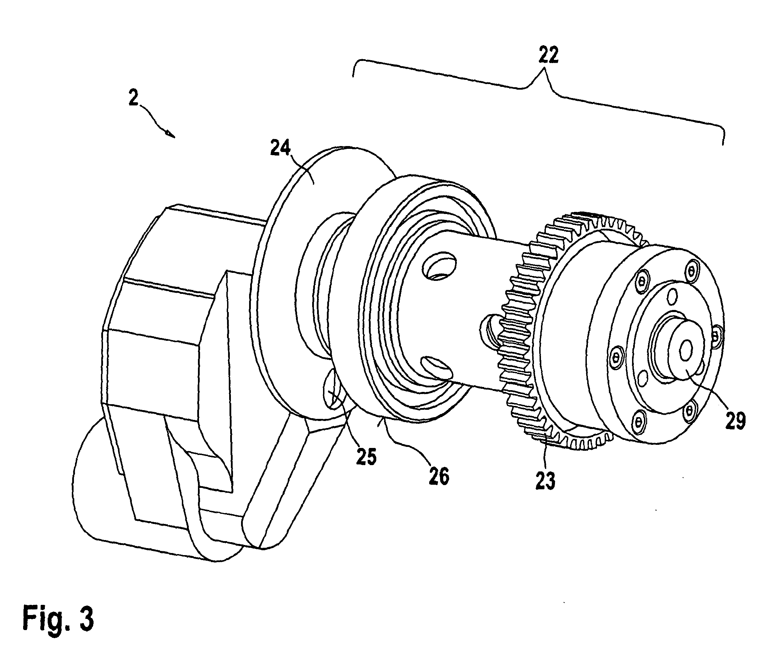

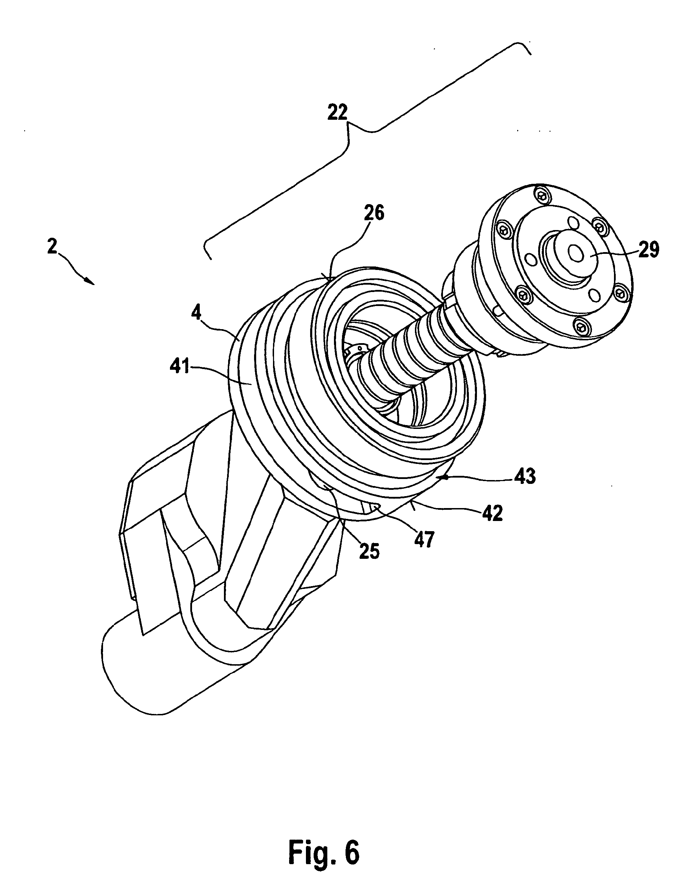

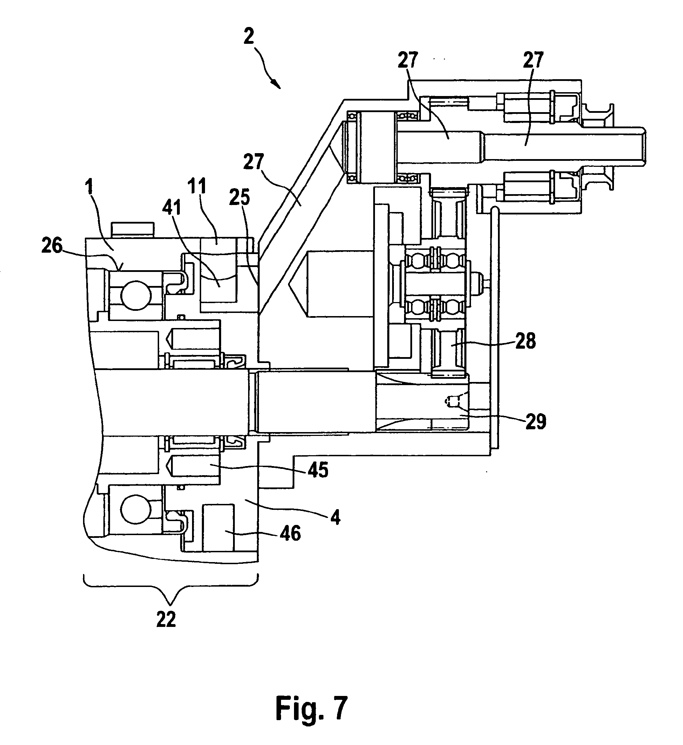

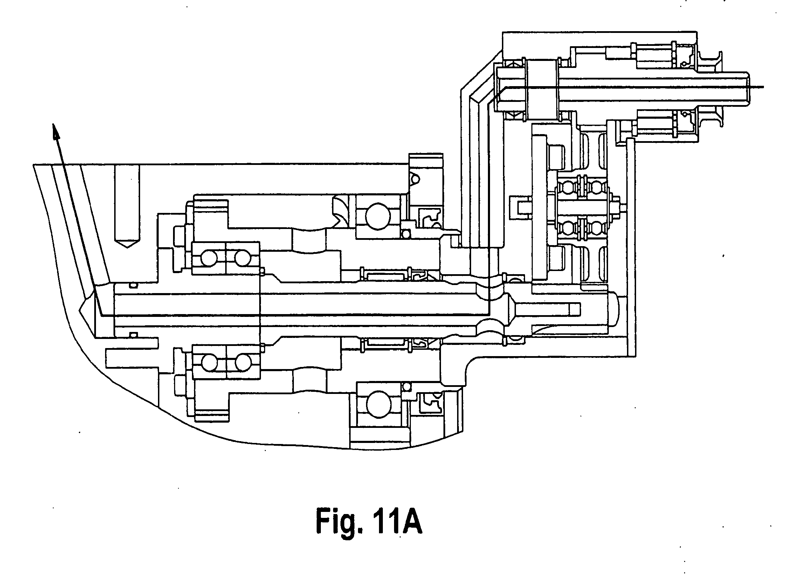

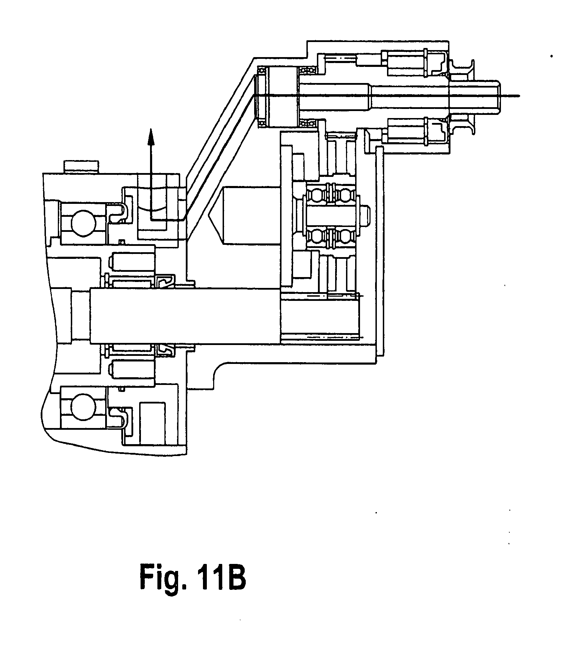

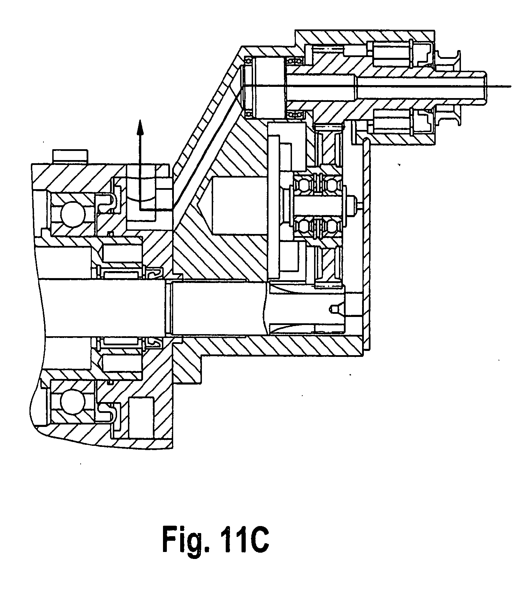

In Fig. 2 bis Fig. 5 sind Vorrichtungen gemäß einer ersten Ausführungsform der vorliegenden Erfindung wiedergegeben. Fig. 6 bis Fig. 11 zeigen Vorrichtungen gemäß einer zweiten Ausführungsform der vorliegenden Erfindung. Der besseren Übersicht halber sind in Fig. 3, Fig. 4, Fig. 6, Fig. 7 und Fig. 11 die Halteköpfe nicht dargestellt. In Fig. 7, Fig. 10, Fig. 11A und Fig. 11B wurden aus demselben Grund die Schraffuren der Schnittflächen weggelassen, und in Fig. 7 und 11 wurden die Umlaufkörper nicht dargestellt, die sich hinter der Schnittebene befinden und von dem geschnittenen Umlaufkörper teilweise verdeckt sind. Soweit nicht anders angegeben, bezeichnen hier identische Bezugszeichen dieselben Elemente oder Bereiche.

In Fig. 2A ist ein Längsförderer gemäß der ersten Ausführungsform der vorliegenden Erfindung gezeigt. Der Grundkörper 1 ist als eine um seine zentrale Achse drehbar gelagerte Trommelwalze ausgebildet, die im Normalbetrieb (das heißt zum Fördern der stabförmigen Artikel) über eine zentrale Welle angetrieben wird. Der Grundkörper 1 weist eine Mantelseite 12 und zwei Grundseiten 13 auf. Die beiden Grundseiten sind jeweils als separate kreisförmige Stirnplatten ausgebildet. Der größte Teil der Mantelseite 12 wird von einer mantelseitigen Abdeckung der Trommelwalze gebildet. Ein kleiner Teil der Mantelseite wird von der Mantelseite der vorderen kreisförmigen Stirnplatte gebildet, an der neun Durchlassöffnungen 11 sowie ein Antriebskranz 14 angeordnet sind. Die Durchlassöffnungen 11 sind hier als radial von der Mantelseite 12 verlaufende Bohrungen ausgeführt. Der Antriebskranz ist hier ein in die Mantelseite der kreisförmigen Stirnplatte integrierter Zahnkranz, der mittels eines manuell bedienbaren Grundkörperantriebsaggregats angetrieben werden kann. Das manuell bedienbare Grundkörperantriebsaggregat wird vornehmlich zu Inspektions- und Wartungszwecken sowie zur Feinjustage eingesetzt (optionaler Nebenantrieb), wenn kein Antrieb über die zentrale Welle (Hauptantrieb im Normalbetrieb) erfolgt.

In die Grundseite 13 des Grundkörpers 1 sind neun Umlaufkörper 2 drehbar eingelassen. Jeder Umlaufkörper 2 weist an seinem vorderen Ende einen Haltekopf 21 auf, der als Zweierschuh mit Aufnahmemulden für jeweils zwei stabförmige Artikel 3 ausgebildet ist. Die Halteköpfe 21 sind am Rest des Umlaufkörpers 2 ebenfalls drehbar gelagert. Zu der Grundseite 13 des Grundkörpers 1 hin sind Kragenscheiben 24 an den Umlaufkörpern 2 angeordnet.

Die Umlaufkörper 2 sind mit dem Grundkörper 1 drehbar verbunden, wobei die Drehrichtung der Umlaufkörper 2 entgegengesetzt ist zu der Drehrichtung des Grundkörpers 1. In dem Zeitraum, in dem sich der Grundkörper 1 einmal um seine Mittelachse dreht, dreht sich jeder Umlaufkörper 2 in entgegengesetzter Drehrichtung um die Mittelachse seines Schaftabschnitts (also um seine Schaftachse). Durch diese beiden gegenläufigen Drehbewegungen durchlaufen die vorderen Enden der Umlaufkörper 2 eine Umlaufbahn in der Form einer liegenden Ellipse. Gleichzeitig drehen sich ebenfalls die Halteköpfe 21 einmal in derselben Drehrichtung wie der Grundkörper 1. Durch diese dritte Drehbewegung bleiben die Halteköpfe 21 stets horizontal ausgerichtet, so dass die Übernahme und Übergabe der stabförmigen Artikel 3 erleichtert wird.

Der in Fig. 2A dargestellte Längsförderer ist sowohl für die Übergabe von in längsaxialer Transportrichtung (Pfeil L) zugeführten stabförmigen Artikeln 3 an einen Förderstrom in queraxiale Transportrichtung (Pfeil Q) als auch für die Übergabe von in queraxialer Transportrichtung (Pfeil Q) zugeführten stabförmigen Artikeln 3 an einen Förderstrom in längsaxiale Transportrichtung (Pfeil L) geeignet. Im ersten Fall bezeichnet der mit (II) gekennzeichnete Punkt die Position eines Umlaufkörpers 2 bei der Übernahme eines stabförmigen Artikels 3 und der mit (I) gekennzeichnete Punkt die Position eines Umlaufkörpers 2 bei der Abgabe eines stabförmigen Artikels 3, wohingegen im letzten Fall der mit (I) gekennzeichnete Punkt die Position eines Umlaufkörpers 2 bei der Übernahme eines stabförmigen Artikels 3 und der mit (II) gekennzeichnete Punkt die Position eines Umlaufkörpers 2 bei der Abgabe eines stabförmigen Artikels 3 wiedergibt.

Demzufolge werden also bei der Übergabe von in längsaxialer Transportrichtung (Pfeil L) zugeführten stabförmigen Artikeln 3 an einen Förderstrom in queraxiale Transportrichtung (Pfeil Q) die stabförmigen Artikel 3 als Doppelstrang dem Längsförderer zugeführt, dessen Trommelwalze eine Drehbewegung im Uhrzeigersinn durchläuft. Im tiefsten Punkt (II) der Ellipsenbahn der Umlaufkörper 2 werden die stabförmigen Artikel von den Ansaugöffnungen in den Aufnahmemulden der Halteköpfe angesaugt und an diesen für etwa eine Vierteldrehung des Grundkörpers 1 gehalten. Im linken Hauptscheitel (I) der Ellipsenbahn werden die stabförmigen Artikel 3 an den queraxial gerichteten Förderstrom abgegeben.

Der in Fig. 2B dargestellte Längsförderer ist mit dem in Fig. 2A gezeigten identisch, jedoch wurde hier die Abdeckung der Mantelseite des Grundkörpers 1 weggelassen, um das Innere der Trommelwalze zu zeigen. Erkennbar sind die hinteren Enden der Schaftabschnitte 22 der Umlaufkörper 2 sowie ein Planetengetriebe 15, mittels dessen die Drehbewegungen der Umlaufkörper 2 und der Halteköpfe 21 mit der Drehbewegung des Grundkörpers 1 gekoppelt werden. Abtriebsseitig greift das Planetengetriebe 15 in Antriebskränze 23 ein, die an den Schaftabschnitten 22 der Umlaufkörper 2 sitzen.

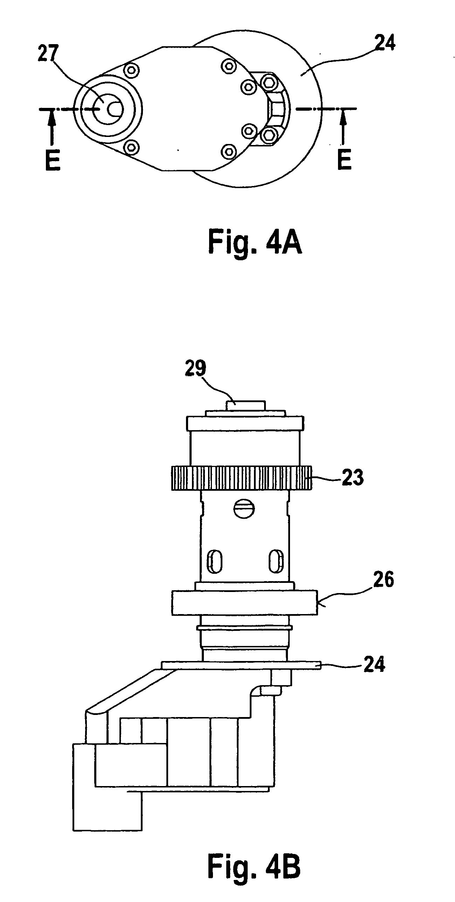

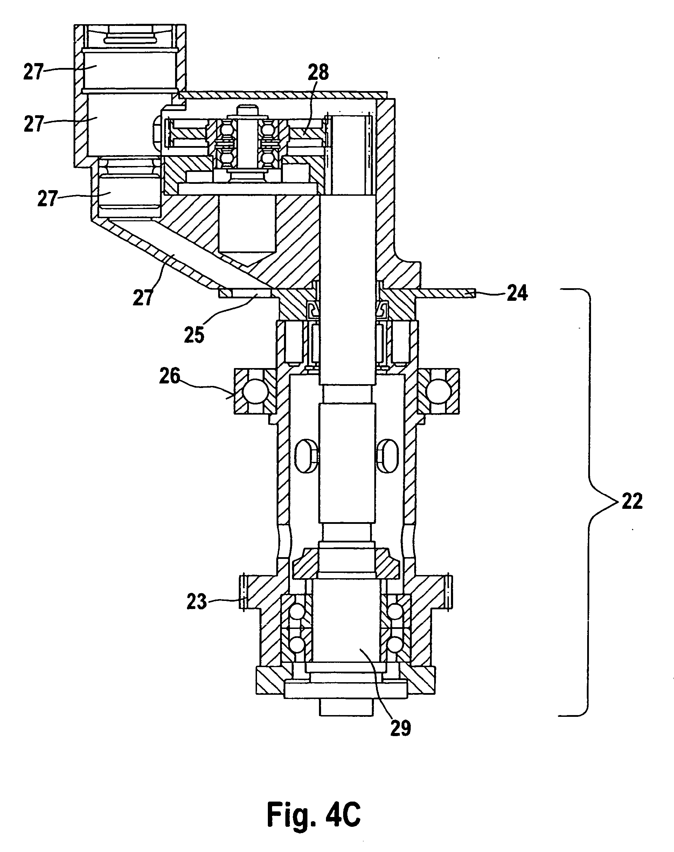

In Fig. 3, Fig. 4A und Fig. 4B ist ein Umlaufkörper 2 gemäß der ersten Ausführungsform der vorliegenden Erfindung gezeigt. Den vorderen Teil des Umlaufkörpers 2 bildet ein kurbelähnlicher Ausleger, an dessen vorderem Ende der (nicht dargestellte) Haltekopf in einer Aufnahme befestigt ist. Der hintere Teil des Umlaufkörpers wird von einem Schaftabschnitt 22 gebildet, der zum vorderen Teil hin von einer Kragenscheibe 24 begrenzt ist.

Der Schaftabschnitt 22 weist eine Lagerfläche 26 auf, die einen Teil des Schaftabschnitts 22 vollumfänglich umgibt und mittels derer der Umlaufkörper 2 in einer Drehlageröffnung des Grundkörpers 1 drehbar aufgenommen wird. Die Lagerfläche 26 bildet hier die Außenseite eines Wälzlagers, das auf einen Teil des Schaftabschnitts 22 aufgesetzt ist. Ferner ist ein Teil des Schaftabschnitts 22 vollumfänglich von einem Antriebskranz 23 umgeben, der als Zahnkranz ausgebildet ist, der in das Planetengetriebe 15 eingreift und dadurch eine Drehbewegung des Umlaufkörpers 2 gegenüber dem Grundkörper 1 antreibt.

Innerhalb des Schaftabschnitts 22 ist eine Innenwelle 29 drehbar gelagert, die in den vorderen Teil des Umlaufkörpers 2 hineinragt und dort in ein innenliegendes Getriebe 28 eingreift. Mittels dieses Getriebes 28 wird der Haltekopf gegenüber dem Rest des Umlaufkörpers 2 in eine Drehbewegung versetzt, die eine während der Umlaufbewegung des Umlaufkörpers 2 gleichbleibend horizontale Ausrichtung des Haltekopfes erlaubt.

Die Kragenscheibe 24 ist mit dem Umlaufkörper 2 drehfest verbunden, so dass diese also gegenüber dem Umlaufkörper 2 nicht verdreht werden kann, sondern an dem Umlaufkörper 2 mittels Schrauben fixiert ist. Die Kragenscheibe weist die Durchführungsöffnung 25 auf, die sich bei dem kurbelähnlichen Auslegerarm befindet. Die hintere Seite der Kragenscheibe (nämlich die im montierten Zustand dem Grundkörper zugewandte Grundfläche der Kragenscheibe) bildet hierbei eine Ventilfläche des Flächenventils. Die Durchführungsöffnung 25 geht in einen Ansaugkanal 27 über, der innerhalb des Auslegerabschnitts des Umlaufkörpers 2 angeordnet ist und bis zu den Ansaugöffnungen des Haltekopfs reicht. Innerhalb des Auslegerabschnitts führt der Ansaugkanal zu einer Aufnahme, in die eine Hohlwelle zum Befestigen an dem Haltekopf eingeführt ist, so dass der Innenraum der Hohlwelle als haltekopfseitiger Ansaugkanal dient. An der Außenseite dieser Hohlwelle ist ein Zahnkranz befestigt, der in das Getriebe 28 eingreift.

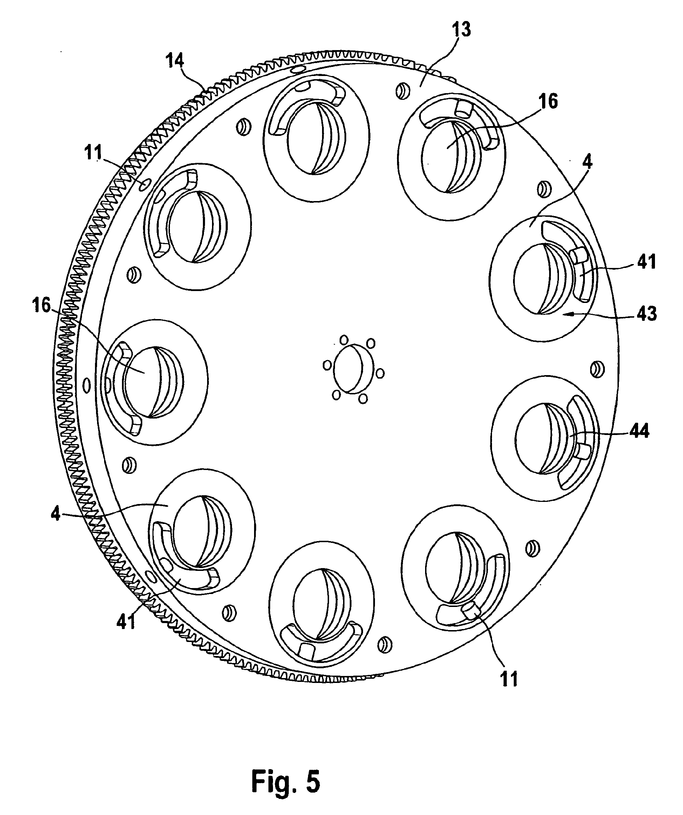

In Fig. 5 ist die vordere Grundseite 13 des Grundkörpers 1 dargestellt. Die Grundseite 13 ist hier als separate kreisförmige Stirnplatte ausgebildet. Diese weist einen zentralen Durchlass als Lager für die Welle auf, die die Mittelachse des Grundkörpers 1 bildet. Ferner weist der Grundkörper 1 neun Drehlageröffnungen 16 auf, die zur Aufnahme der Lagerflächen 26 der Umlaufkörper 2 angepasst sind. An der mantelseitigen Außenseite der Stirnplatte ist des weiteren der Antriebskranz 14 als Teil des Grundkörpers vorgesehen. Der Antriebskranz 14 ist als Zahnkranz ausgebildet, mittels dessen eine Drehung des Grundkörpers 1 um seine Mittelachse zu Inspektions- und Wartungszwecken sowie zur Feinjustage angetrieben werden kann.

In die Grundseite 13 sind weiterhin die Steuerscheiben 4 als Teil der Stirnplatte integriert. Die Ringgrundseiten 43 der Steuerscheiben 4 sind demzufolge kreisringförmige Bereiche der Stirnplatte, die um jeweils eine Drehlageröffnung 16 als Mittelpunkt des Kreisrings angeordnet sind. Die innere Mantelseite der Steuerscheibe kann hierbei als zusätzliche Drehlagerfläche zur Aufnahme des Schaftäbschnitts 22 ausgebildet sein oder aber gegenüber dem Umfang des Schaftabschnitts 22 auf Spaltmaß gefertigt sein.

In den kreisringförmigen Bereichen der Stirnplatte befinden sich kreisbogenförmige Vertiefungen 41 als Teil der Steuerscheibe 4. Die kreisbogenförmigen Vertiefungen 41 sind in die Stirnplatte in axialer Richtung eingelassen, wobei die Tiefe dieser Vertiefungen geringer als die Gesamtstärke der Stirnplatte ist, so dass sich die Vertiefungen nicht vollständig durch die Stirnplatte hindurch erstrecken.
Die Ringgrundseite 43 und die kreisbogenförmige Vertiefung 41 der Steuerscheibe dienen hierbei als weitere Ventilfläche des Flächenventils.

Die kreisbogenförmigen Vertiefungen 41 sind in ihrer Bogenmitte über radiale Durchlassöffnungen 11, die sich von dem mantelseitigen Bereich der Stirnplatte bis zu den kreisbogenförmigen Vertiefungen 41 erstrecken, mit der Außenseite des Grundkörpers durchgängig verbunden. Demzufolge sind die kreisbogenförmigen Vertiefungen 41 mit ihrer Bogenmitte zum Umfang des Grundkörpers 1 hin gerichtet angeordnet; anstelle dessen sind natürlich auch beliebige andere Anordnungen der kreisbogenförmigen Vertiefungen 41 auf der Grundseite 13 möglich.

Beim Betrieb des Längsförderers sind, wie in Fig. 2 dargestellt, die Umlaufkörper 2 in denDrehlageröffnungen 16 derart angeordnet, dass die Kragenscheiben 24 die Steuerscheiben 4 in dem Grundkörper 1 nach außen hin vollständig bedecken. Wenn ein Umlaufkörper 2 in einer Drehlageröffnung 16 gedreht wird, dann führt auch die Durchführungsöffnung 25 eine kreisförmige Bewegung um die Mittelachse des Schaftabschnitts 22 aus. Da der radiale Abstand der Durchführungsöffnung 25 vom Mittelpunkt der Mittelachse des Schaftabschnitts 22 genauso groß ist wie der Radius des Vollkreises, auf dem die kreisbogenförmige Vertiefung 41 angeordnet ist, wird die Durchführungsöffnung 25 also periodisch an der kreisbogenförmigen Vertiefung 41 vorbeigeführt.

Befindet sich bei einer derartigen Drehbewegung die Durchführungsöffnung 25 vor der kreisbogenförmigen Vertiefung 41, so besteht eine durchgängige Verbindung zwischen der Durchlassöffnung 11 und dem Ansaugkanal 27, so dass letzterer evakuiert wird. Befindet sich die Durchführungsöffnung 25 hingegen vor einem Teil der Ringgrundseite 43, an dem keine Vertiefung vorhanden ist, so besteht keine Verbindung zwischen der Durchlassöffnung 11 und dem Ansaugkanal 27.

Somit bilden die Kragenscheibe 24 mit der Durchführungsöffnung 25 einerseits und die Ringgrundseite 43 mit der kreisbogenförmigen Vertiefung 41 andererseits die Ventilflächen eines Flächenventils, das geöffnet ist, wenn sich die Durchführungsöffnung 25 vor der kreisbogenförmigen Vertiefung 41 befindet, und das ansonsten geschlossen ist.

Damit einerseits eine hinreichend hohe Dichtigkeit des Flächenventils gegeben ist und eine unerwünschte Verringerung des Unterdrucks vermieden wird, andererseits aber eine freie Drehbarkeit um die Mittelachse des Schaftabschnitts 22 mit möglichst geringen Reibungsverlusten gewährleistet ist, sind die hintere Grundseite der Kragenscheibe 24 und die Ringgrundseite 43 der Steuerscheibe 4 auf geringes Spaltmaß gefertigt und benötigen aufgrund der großen Überlappungsfläche beider Elemente daher keine zusätzlichen Dichtmittel. Das Betätigen des Flächenventils erfolgt also durch die Drehbewegung des Umlaufkörpers 2 relativ zum Grundkörper 1, wobei Lage und Länge der kreisbogenförmigen Vertiefung 41 die Steuerkurve des Flächenventils und somit dessen Steuercharakteristik bestimmen.

In Fig. 6 ist ein Umlaufkörper 2 mit einer daran befestigten Steuerscheibe 4 gemäß einer zweiten Ausführungsform der vorliegenden Erfindung gezeigt. Der Umlaufkörper 2 der zweiten Ausführungsform ist mit dem Umlaufkörper der ersten Ausführungsform nahezu identisch und unterscheidet sich lediglich darin, dass die drehfest befestigte Kragenscheibe der ersten Ausführungsform hier durch eine drehfest befestigte Steuerscheibe 4 mit einer kreisbogenförmigen Vertiefung 41 ersetzt ist, wobei die Steuerscheibe 4 (ebenso wie die Kragenscheibe der ersten Ausführungsform) in ihrer Grundseite eine axiale Durchführungsöffnung 25 besitzt.

Der Umlaufkörper 2 weist an seinem vorderen Ende einen Auslegerabschnitt und an seinem hinteren Ende einen Schaftabschnitt 22 auf, wobei beide Abschnitte gegeneinander durch die Steuerscheibe 4 abgegrenzt werden. Um einen Teil des Schaftabschnitts 22 ist ein als Außenseite eines Wälzlager ausgebildete Lagerfläche 26 des Umlaufkörpers 2 vorgesehen. (Der Übersicht halber ist in Fig. 6 der hülsenartige Außenmantel des Schaftabschnitts 22 nicht dargestellt, so dass hier die Innenwelle 29 zur Drehung des Haltekopfes sichtbar ist.)

Die Steuerscheibe 4 ist mit dem Rest des Umlaufkörpers 2 drehfest verbunden. Sie ist dabei als Scheibenring mit einer äußeren Mantelseite 42 und einer inneren Mantelseite ausgebildet. An der äußeren Mantelseite 42 der Steuerscheibe 4 befindet sich eine kreisbogenförmige Vertiefung 41, die sich in radialer Richtung in die Steuerscheibe 4 hinein erstreckt, üblicherweise jedoch nicht bis zur inneren Mantelseite der Steuerscheibe 4 reicht. In ihrer Längsrichtung folgt der Verlauf der kreisbogenförmigen Vertiefung 41 dem Mantelumfang der äußeren Mantelseite 42. In Umfangsrichtung der Steuerscheibe 4 ist die kreisbogenförmige Vertiefung 41 durch die Trennwandabschnitte 47 begrenzt. Die Steuerscheibe 4 weist an ihrer vorderen Ringgrundseite 43 eine Durchführungsöffnung 25 auf, die den Ansaugkanal im Innern des Umlaufkörpers 2 mit der kreisbogenförmigen Vertiefung 41 verbindet.

Fig. 7 zeigt gemäß der zweiten Ausführungsform der vorliegenden Erfindung den Umlaufkörper 2 in einem Grundkörper 1. Der Schaftabschnitt 22 mit der innenliegenden Innemwelle 29 befindet sich hier im Innern des Grundkörpers 1 und ist über die als Wälzlager ausgebildete Lagerfläche 26 in einer Drehlageröffnung des Grundkörper 1 drehbar gelagert, so dass der gesamte Umlaufkörper 2 um die Mittelachse des Schaftabschnitts 22 rotieren kann. Zum vorderen Ende des Grundkörpers 1 hin erweitert sich die Drehlageröffnung zu einer Aufnahmevertiefung für die Steuerscheibe 4 und geht somit in diese über. Am vorderen Ende der Innenwelle 29 ist innerhalb des Umlaufkörpers 2 ein Getriebe 28 angeordnet, das eine separate Drehbewegung auf den (nicht dargestellten) Haltekopf überträgt.

Die Steuerscheibe 4 ist mit dem Umlaufkörper 2 über Schrauben und Schraubenöffnungen 45 drehfest verbunden, so dass die Steuerscheibe 4 also gegenüber dem Umlaufkörper 2 nicht verdreht werden kann, sondern an diesem fixiert ist. Die Durchführungsöffnung 25 ist in der Steuerscheibe 4 bei dem kurbelähnlichen Auslegerarm angeordnet. Die Durchführungsöffnung 25 geht in einen Ansaugkanal 27 über, der innerhalb des Auslegerabschnitts des Umlaufkörpers 2 angeordnet ist und bis zu den Ansaugöffnungen des Haltekopfs reicht. Innerhalb des Auslegerabschnitts führt der Ansaugkanal 27 zu einer Aufnahme, in den eine Hohlwelle zum Befestigen an dem Haltekopf eingeführt ist, so dass der Innenraum der Hohlwelle als haltekopfseitiger Ansaugkanal dient. An der Außenseite dieser Hohlwelle ist ein Zahnkranz befestigt, der in das Getriebe 28 eingreift.

Die Steuerscheibe 4 weist an ihrer äußeren Mantelseite 13 die kreisbogenförmige Vertiefung 41 und darüber hinaus eine kreisbogenförmige Aussparung 46 auf. Die kreisbogenförmige Vertiefung 41 und die kreisbogenförmige Aussparung 46 sind voneinander durch einen Trennwandabschnitt abgetrennt und überlappen daher einander nicht. Infolge der kreisbogenförmigen Aussparung 46 wird das Ausmaß einer ungleichmäßigen Masseverteilung der Steuerscheibe entlang ihres Mantelumfangs und somit das Auftreten einer Unwucht verringert.

Auch bei der zweiten Ausführungsform wird der Ansaugkanal mittels eines Flächenventils verschlossen. Eine der beiden Ventilflächen des Flächenventils wird hierbei von der äußeren Mantelseite 42 der Steuerscheibe 4 gebildet, die die kreisbogenförmige Vertiefung 41 aufweist. Die andere der beiden Ventilflächen wird durch die Grundseite 13 des Grundkörpers 1 gebildet, genauer gesagt durch die Innenseite der Aufnahmevertiefung für eine Steuerscheibe 4 und der darin vorgesehenen Durchlassöffnung 11. Beim Betrieb des Längsförderers sind die Umlaufkörper 2 in den Drehlageröffnungen des Grundkörpers 1 derart angeordnet, dass die Steuerscheiben 4 ebenfalls in den Grundkörper 1 eingelassen sind, so dass die kreisbogenförmige Vertiefung 41 nicht über die äußere Begrenzung der Ebene der Grundseite 13 hinausragt.

Führt der Umlaufkörper 2 eine Drehbewegung um die Mittelachse seines Schaftabschnitts 22 aus, dann führt auch die Steuerscheibe 4 eine kreisförmige Bewegung um die Mittelachse des Schaftabschnitts 22 aus. Der axiale Abstand der kreisbogenförmigen Vertiefung 41 von der Ringgrundseite 43 der Steuerscheibe 4 ist genauso groß ist wie axiale Abstand der Durchlassöffnung 11 von der Ringgnundseite 43 der Steuerscheibe 4, so dass bei einer Drehung des Umlaufkörpers 2 um die Mittelachse des Schaftabschnitts 22 die kreisbogenförmige Vertiefung 41 also periodisch an der Durchlassöffnung 11 vorbeigeführt wird.

Befindet sich bei einer derartigen Drehbewegung die kreisbogenförmige Vertiefung 41 vor der Durchlassöffnung 11, dann besteht eine durchgängige Verbindung zwischen der Durchlassöffnung 11 und dem Ansaugkanal 27, so dass letzterer evakuiert wird. Befindet sich jedoch ein anderer Teil der Mantelseite 42 der Steuerscheibe 4, der nicht mit der Durchführungsöffnung 25 durchgängig verbunden ist (dies kann auch die kreisbogenförmige Aussparung 46 sein), vor der Durchlassöffnung 11, so besteht keine Verbindung zwischen der Durchlassöffnung 11 und dem Ansaugkanal 27. In diesem Fall liegt an dem Ansaugkanal 27 also kein Unterdruck an, so dass stabförmige Artikel nicht am Haltekopf gehalten werden können (und sich gegebenenfalls von diesem ablösen).

Somit bilden die Mantelseite 42 mit der kreisbogenförmigen Vertiefung 41 einerseits und die Innenseite der Aufnahmevertiefung für die Steuerscheibe 4 an der Grundseite 13 des Grundkörpers 1 mit der Durchlassöffnung 11 andererseits die Ventilflächen eines Flächenventils, das geöffnet ist, wenn sich die kreisbogenförmige Vertiefung 41 vor der Durchlassöffnung 11 befindet, und das ansonsten geschlossen ist.

Das Betätigen des Flächenventils erfolgt also durch die Drehbewegung des Umlaufkörpers 2 relativ zum Grundkörper 1, wobei auch hier Lage und Länge der kreisbogenförmigen Vertiefung 41 die Steuerkurve des Flächenventils und somit dessen Steuercharakteristik bestimmen.

Damit eine hinreichend hohe Dichtigkeit des Flächenventils gegeben ist und eine unerwünschte Verringerung des Unterdrucks vermieden wird, gleichzeitig aber auch eine freie Drehbarkeit um die Mittelachse des Schaftabschnitts 22 mit möglichst geringen Reibungsverlusten gewährleistet ist, sind die Innenseite der Aufnahmevertiefung für die Steuerscheibe 4 an der Grundseite 13 des Grundkörpers 1 und die äußere Mantelseite 42 der Steuerscheibe 4 auf geringes Spaltmaß gefertigt und benötigen keine zusätzlichen Dichtmittel.

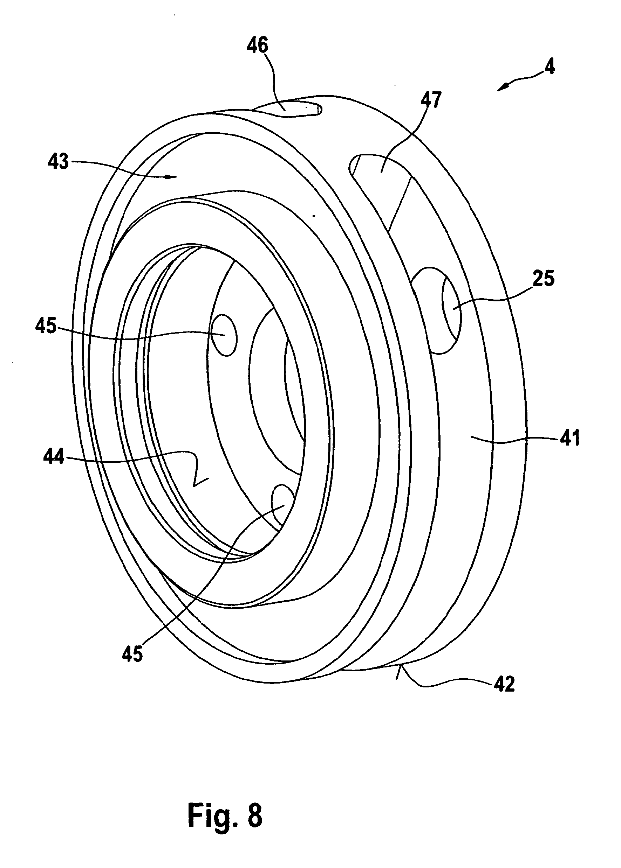

In Fig. 8 ist die Steuerscheibe 4 ohne den Umlaufkörper dargestellt. Diese ist als Ringscheibe ausgebildet und weist eine äußere Mantelfläche 42, eine innere Mantelfläche 44 sowie zwei Ringgrundseiten 43 auf. In der äußeren Mantelfläche 42 sind die kreisbogenförmige Vertiefung 41 und die kreisbogenförmige Aussparung 46 angeordnet, wobei die Innenräume beider Elemente nicht miteinander durchgängig verbunden sind. Die eine Ringgrundseite 43, die im Verbund mit dem Umlaufkörper 2 hinten und somit dem Schaftabschnitt 22 zugewandt angeordnet ist, weist eine axiale Durchführungsöffnung 25 sowie vier Schraubenöffnungen 45 zur Aufnahme von Befestigungsschrauben auf. Im Verbund mit dem Umlaufkörper 2 ist die Durchführungsöffnung 25 mit dem Ansaugkanal durchgängig verbunden.

Zum drehfesten Verbinden der Steuerscheibe 4 mit dem Umlaufkörper wird die Steuerscheibe mittels Schrauben, die durch die Schraubenöffnungen 45 hindurchgeführt werden, an dem Umlaufkörper derart verschraubt, dass die hintere Ringgrundseite 43 frei zugänglich ist und die innere Mantelfläche 44 mit dem hülsenartigen Außenmantel des Schaftabschnitts in Kontakt steht.

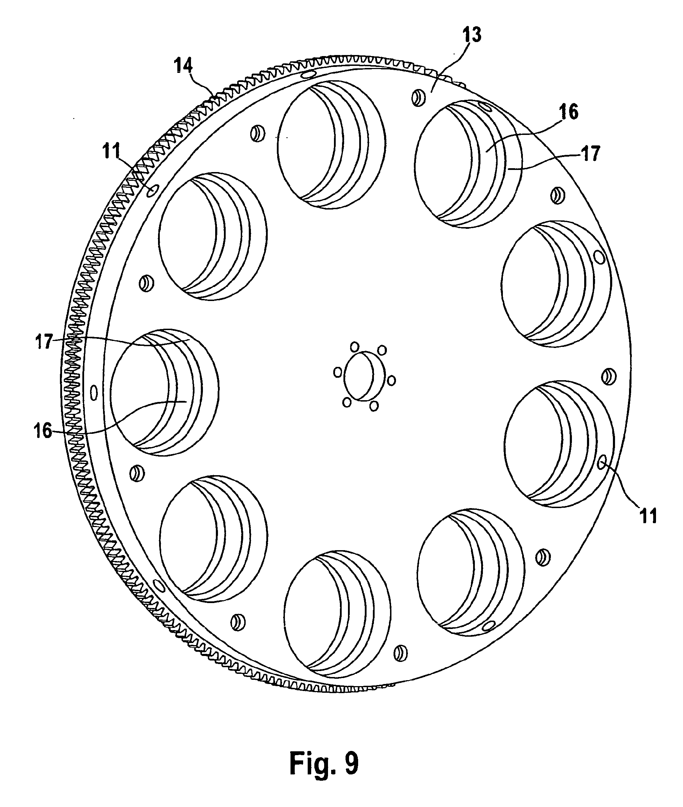

In Fig. 9 ist die vordere Grundseite 13 des Grundkörpers 1 dargestellt. Die Grundseite 13 ist hier als separate kreisförmige Stirnplatte ausgebildet. Diese weist einen zentralen Durchlass als Lager für die Welle auf, die die Mittelachse des Grundkörpers 1 bildet. Ferner weist der Grundkörper 1 neun Drehlageröffnungen 16 auf, die zur Aufnahme der Lagerflächen 26 der Umlaufkörper 2 angepasst sind. An der mantelseitigen Außenseite der Stirnplatte ist des weiteren der Antriebskranz 14 als Teil des Grundkörpers vorgesehen. Der Antriebskranz 14 ist als Zahnkranz ausgebildet, mittels dessen eine Drehbewegung des Grundkörpers 1 um seine Mittelachse zu Inspektions- und Wartungszwecken sowie zur Feinjustage angetrieben werden kann.

In die Grundseite 13 sind weiterhin die Aufnahmevertiefungen 17 für die Steuerscheiben 4 integriert. Die Drehlageröffnungen 16 gehen hierbei in die Aufnahmevertiefungen 17 über. Die Drehlageröffnungen 16 weisen vorliegend einen geringeren Durchmesser auf als die Aufnahmevertiefungen 17, so dass sich jede Drehlageröffnung 16 zu einer Aufnahmevertiefung 17 aufweitet. Stattdessen können die Aufnahmevertiefungen 17 auch einen geringeren Durchmesser aufweisen als die Drehlageröffnungen 16, so dass sich letztere zu ersteren verjüngen. Natürlich können Drehlageröffnungen 16 und Aufnahmevertiefungen 17 auch gleiche Durchmesser aufweisen oder beliebig voneinander abgesetzt sein.

Die Wand jeder Aufnahmevertiefung 17 dient hierbei als abdichtende Ventilfläche des Flächenventils. Die Aufnahmevertiefungen 17 der Stirnplatte sind über radiale Durchlassöffnungen 11, die sich von dem mantelseitigen Bereich der Stirnplatte bis zu den Aufnahmevertiefungen 17 erstrecken, mit der Außenseite des Grundkörpers durchgängig verbunden. Die Durchlassöffnungen 11 dienen hierbei also als durchgängige (öffnende) Abschnitte des Flächenventils.

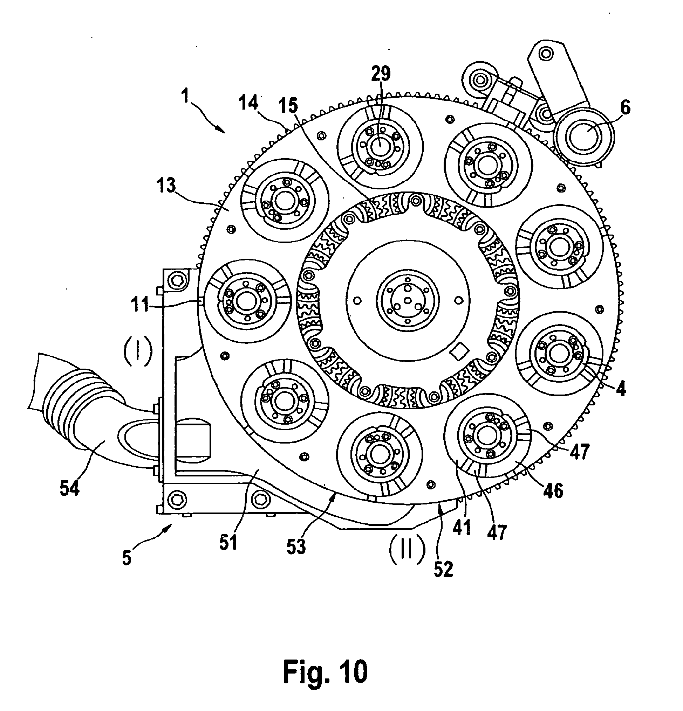

In Fig. 10 ist eine Schnittdarstellung der Grundseite 13 des Grundkörpers 1 mit den eingesetzten Umlaufkörpern dargestellt, wobei die Schnittebene ungefähr auf halber Höhe der Steuerscheiben 4 verläuft. Die Grundseite 13 weist neun kreisförmige Aussparungen auf, in denen die neun Steuerscheiben 4 mit geringem Spaltmaß eingepasst sind. Jede Steuerscheibe 4 weist eine kreisbogenförmige Vertiefung 41 und eine bezüglich des Umfangs der Steuerscheibe 4 komplementäre kreisbogenförmige Aussparung 46 auf, die voneinander durch zwei Trennwandabschnitte 47 abgetrennt sind. Die kreisbogenförmige Vertiefung 41 ist auf etwa zwei Dritteln eines Vollkreises angeordnet, so dass der Mittelpunktswinkel etwa 240 beträgt. Demzufolge beträgt der des Mittelpunktwinkels des Kreisbogens der kreisbogenförmigen Aussparung 46 etwa 120°, entsprechend einem Wert von 360° abzüglich des Mittelpunktwinkels des Kreisbogens der kreisbogenförmigen Vertiefung 41 (sowie des Winkels der Ausdehnung der Trennwandabschnitte 47). Jede kreisbogenförmige Vertiefung 41 ist über je eine radiale Durchlassöffnung 11 mit der Mantelseite des Grundkörpers 1 durchgängig verbunden.

An der Mantelseite 12 ist ein als Zahnkranz ausgebildeter Antriebskranz 14 an dem Grundkörper 1 befestigt, der in das Antriebsrad eines manuell bedienbaren Grundkörperantriebsaggregats 6 eingreift. Zu Inspektions- und Wartungszwecken sowie zur Feinjustage kann der Grundkörper so in eine Drehbewegung um seine Mittelachse versetzt werden. Im Normalbetrieb wird die Drehbewegung jedoch über eine zentrale Welle bewirkt. Die Drehbewegung wird über ein Planetengetriebe 15 im Innern des trommelförmigen Grundkörpers 1 in eine gegenläufige Drehbewegung der Umlaufkörper um die Mittelachsen ihrer Schaftabschnitte umgesetzt. Gleichzeitig werden die innerhalb der Schaftabschnitte drehbar gelagerten Innenwellen 29 durch das Planetengetriebe 15 angetrieben und versetzen so die Halteköpfe in eine zu der ersten Drehbewegung drehgleiche Rotationsbewegung.

Bei der Drehung der Schaftabschnitte der Umlaufkörper innerhalb der Drehlageröffnungen an der Grundseite 13 werden die drehfest mit den Umlaufkörpern verbundenen Steuerscheiben 4 mitgeführt. Im Verlauf der Drehbewegung des Grundkörpers wird die kreisbogenförmige Vertiefung 41 jeder Steuerscheiben jeweils in der gleichen Winkelstellung des Grundkörpers 1 an den Durchlassöffnungen 11 vorbeigeführt, so dass die Ansaugkanäle der Umlaufkörper nacheinander evakuiert werden.

Ein Evakuieren des Ansaugkanals eines Umlaufkörpers ist jedoch nur für die Umlaufkörper möglich, die in dem Viertelkreis zwischen den Positionen (II) und (I) angeordnet sind, da nur dort die Ansaugkanäle mit Unterdruck beaufschlagt werden. Im unteren linken Bereich des Umfangs des Grundkörpers ist ein Unterdruckverteiler 5 angeordnet, der als Vakuumschuh ausgebildet ist. Dieser Unterdruckverteiler 5 weist als Unterdruckabschnitt 51 einen inneren Hohlraum auf, der über einen Absaugstutzen 54 mit einer Pumpeneinrichtung verbunden ist und so mit einem Unterdruck beaufschlagt wird. Die Außenseite des Unterdruckverteilers 5, die mit dem Grundkörper 1 in Kontakt steht, weist einen konkaven Mantelseitenabschnitt 52 auf, der als Teil einer konkaven Zylindermantelfläche ausgebildet ist. Der konkave Mantelseitenabschnitt 52 liegt mit geringem Spaltmaß an der Mantelseite des Grundkörpers 1 an und dichtet so den Unterdruckabschnitt 51 nach außen ab. Der Unterdruckabschnitt 51 weist im Bereich der Durchlassöffnungen 11 des Grundkörpers 1 eine ebenfalls konkave Schlitzöffnung 53 auf, über die der Unterdruckabschnitt 51 in diesem Bereich mit den Durchlassöffnungen 11 durchgängig verbunden ist.

Beim Durchlaufen des Bereichs zwischen den Grundkörperpositionen (II) und (I) liegt somit an den dort befindlichen Durchlassöffnungen 11 des Grundkörpers 1 ein Unterdruck an. Wird zusätzlich das Flächenventil durch die Drehung der Steuerscheibe 4 freigegeben, so wird der Ansaugkanal evakuiert. Wird das Flächenventil anschließend wieder geschlossen, so nähert sich der Innendruck der Ansaugleitung dem Außendruck rasch an. Da die Drehbewegung des Grundkörpers 1 und die Drehbewegung der Schaftabschnitte über das Planetengetriebe 15 aneinander gekoppelt sind, bestimmt die Steuerkante der kreisbogenförmigen Vertiefung das Schließverhalten (Schaltverhalten) des Flächenventils.

Lediglich der Vollständigkeit halber sei darauf hingewiesen, dass der in Fig. 10 gezeigte Unterdruckverteiler 5 wie auch das dort wiedergegebene manuell bedienbare Grundkörperantriebsaggregat 6 natürlich ebenfalls bei der Fördervorrichtung gemäß der ersten Ausführungsform verwendet werden können.

In Fig. 11 sind die bereits in Fig. 1 und Fig. 7 gezeigten Schnittdarstellungen eines Umlaufkörpers in einem Grundkörper eines konventionellen Längsförderers (Fig. 11 A) sowie gemäß der zweiten Ausführungsform der vorliegenden Erfindung (Fig. 11B) wiedergegeben. Ferner ist eine der Fig. 7 entsprechende Schnittdarstellung für einen Umlaufkörper in einem Grundkörper gemäß der ersten Ausführungsform der vorliegenden Erfindung gezeigt, der sich hinsichtlich der zweiten Ausführungsform lediglich im Hinblick auf die Steuerscheibe und die Kragenscheibe unterscheidet (Fig. 11C).

In Fig. 11 ist der Verlauf der beim Halten von stabförmigen Artikeln jeweils zu evakuierenden Unterdruckleitung innerhalb des Grundkörpers und innerhalb des Umlaufkörpers (letzteres allerdings ohne Haltekopf) als breite schwarze Linie hervorgehoben. Beim Vergleich von Fig. 11A mit Fig. 11B und Fig. 11C ist erkennbar, dass bei den aus dem Stand der Technik bekannten Vorrichtungen die Länge der zu evakuierenden Unterdruckleitung erheblich länger ist als bei der Vorrichtung gemäß der vorliegenden Erfindung.

In der Praxis bedeutet dies eine Verkürzung der Unterdruckleitung auf weniger als die Hälfte (von 375 mm auf 150 mm) und eine Verringerung des Volumens der Unterdruckleitung auf etwa drei Viertel (von 33 cm³ auf 24 cm³), so dass die Luftmengen zum Belüften und Entlüften der Unterdruckleitung signifikant abnehmen. Nach dem Öffnen des Flächenventils kann in der erfindungsgemäßen Vorrichtung also der zum Halten erforderliche Unterdruck im Ansaugkanal schneller erreicht werden als in der aus dem Stand der Technik bekannten Vorrichtung. Indem es die Erfindung ermöglicht, die Öffnung des Ansaugkanals nicht ausschließlich am Schaftende sondern an einer beliebigen Position am dem Schaft des Umlaufkörpers auszubilden, können also insgesamt kürzere Steuerzeiten realisiert werden.

Ferner ist aus Fig. 11A, Fig. 11B und Fig. 11C ersichtlich, dass sich durch Ausnutzen der erfindungsgemäßen Lehre innerhalb des Umlaufkörpers geringere Umlenkwinkel erreichen lassen als bei den aus dem Stand der Technik bekannten Umlenkkörpern, da der Ansaugweg bei der vorliegenden Erfindung nicht mehr zwingend zur Mittelachse des Schaftabschnitts umgelenkt werden muss, so dass sich bei gleicher Einbautiefe geringere Umlenkwinkel realisieren lassen (etwa 2 x 70° anstelle von 2 x 90 °). Dies hat eine Verringerung des Strömungswiderstands um mehr als 30 % zur Folge.

Beim Einsatz der erfindungsgemäßen Vorrichtung ist daher der aus dem Strömungswiderstand der Unterdruckleitung resultierende Unterdruckabfall erheblich geringer. Aus diesem Grund ist auch für den Fall eines unerwünschten Ablösens eines stabförmigen Artikels vom Haltekopf ein effektives Halten der stabförmigen Artikel mit gleichzeitig genügend hohen Unterdruckreserven bereits bei geringer Pumpleistung gewährleistet. Zudem können auch luftdurchlässigere (porösere) oder schwerere stabförmige Artikel gefördert werden, ohne dass hierfür die Pumpleistung erhöht werden muss.

Eine weitere Ausführungsform der erfindungsgemäßen Fördervorrichtung zeichnet sich dadurch aus, dass das Innenvolumen des Unterdruckabschnitts (51) größer ist als die Summe der Innenvolumina der Ansaugöffnungen und Ansaugkanäle (27) derjenigen Umlaufkörpers, die jeweils mit dem Unterdruckabschnitt (51) durchgängig verbunden sind. Des Weiteren kann der erste Transportstrom eine in Bezug auf die stabförmigen Artikel (3) längsaxiale Förderrichtung (L) und der zweite Transportstrom eine in Bezug auf die stabförmigen Artikel (3) queraxiale Förderrichtung (Q) aufweisen, wobei der Längsförderer zur Übernahme von stabförmigen Artikeln (3), die dem Längsförderer längsaxial zugeführt werden, und zur Abgabe der stabförmigen Artikel (3) in queraxiale Förderrichtung (Q) angepasst ist. Der erste Transportstrom kann auch eine in Bezug auf die stabförmigen Artikel (3) queraxiale Förderrichtung (Q) und der zweite Transportstrom eine in Bezug auf die stabförmigen Artikel (3) längsaxiale Förderrichtung (L) aufweisen, wobei der Längsförderer zur Übernahme von stabförmigen Artikeln (3), die dem Längsförderer queraxial zugeführt werden, und zur Abgabe der stabförmigen Artikel (3) in längsaxiale Förderrichtung (L) angepasst ist. Optional weist die Fördervorrichtung einen Querförderer auf, der eine in queraxiale Förderrichtung laufende gekrümmte Förderfläche mit einer Mehrzahl an Queraufnahmen für die stabförmigen Artikel aufweist.

Das erfindungsgemäße Verfahren kann sich auch dadurch auszeichnen, dass bei jeder Vollkreisdrehung des Umlaufkörpers (2) relativ zum Grundkörper (1) das Flächenventil mindestens einmal geöffnet wird und mindestens einmal geschlossen wird.

## Patentansprüche

1. Fördervorrichtung für stabförmige Artikel (3) zum Umleiten der stabförmigen Artikel (3) aus einem ersten Transportstrom in einen zweiten Transportstrom, wobei der eine der beiden Transportströme eine in Bezug auf die stabförmigen Artikel (3) längsaxiale Förderrichtung (L) aufweist und der andere der beiden Transportströme eine in Bezug auf die stabförmigen Artikel (3) queraxiale Förderrichtung (Q), die quer zur längsaxialen Förderrichtung (L) verläuft, aufweist, die Fördervorrichtung umfassend einen Längsförderer mit einem Grundkörper (1) und einer Mehrzahl an Umlaufkörpern (2),
wobei der Grundkörper (1) eine Mehrzahl an Durchlassöffnungen (11) umfasst und für eine Drehbewegung um seine Mittelachse drehbar gelagert ist,
wobei jeder der Umlaufkörper (2) einen Schaftabschnitt (22), einen Ansaugkanal (27) und mindestens einen Haltekopf (21) umfasst und für eine Umlaufbewegung auf einer definierten Umlaufbahn bei der Drehbewegung des Grundkörpers (1) um seine Mittelachse angepasst ist,
von denen der Schaftabschnitt (22) um die Mittelachse des Schaftabschnitts (22) im Grundkörper (1) drehbar gelagert ist,
von denen der mindestens eine Haltekopf (21) wenigstens eine Ansaugöffnung aufweist und zum Halten von wenigstens einem stabförmigen Artikel (3) mittels Unterdruck an der wenigstens einen Ansaugöffnung angepasst ist, und
von denen der Ansaugkanal (27) an seinem einen Ende einen ersten Endbereich und an seinem anderen Ende einen zweiten Endbereich aufweist, wobei der erste Endbereich mit der wenigstens einen Ansaugöffnung des Haltekopfs (21) durchgängig verbunden ist und wobei der zweite Endbereich mit jeweils einer Durchlassöffnung (11) des Grundkörpers (1) durchgängig verbindbar ausgebildet ist,
**dadurch gekennzeichnet, dass**
jedem Umlaufkörper (2) eine Steuerscheibe (4) zugeordnet ist, die zumindest an einem Teil des Schaftabschnitts (22) vorgesehen ist und die zum Steuern der Durchgängigkeit der Verbindung zwischen dem zweiten Endbereich des Ansaugkanals (27) des Umlaufkörpers (2) und der Durchlassöffnung (11) des Grundkörpers (1) bei einer Drehbewegung des Umlaufkörpers (2) um die Mittelachse des Schaftabschnitts (22) eingerichtet ist,
wobei die Steuerscheibe (4) eine kreisbogenförmige Vertiefung (41) aufweist,
die auf einem Vollkreis, der bezüglich der Mittelachse des Schaftabschnitts (22) zumindest im Wesentlichen konzentrisch ist, als Kreisbogen angeordnet ist, der einen Mittelpunktswinkel von weniger als 360 ° aufweist, und
die derart ausgebildet ist, dass bei jeder Vollkreisdrehung des Umlaufkörpers (2) um die Mittelachse des Schaftabschnitts (22) der Ansaugkanal (27) des Umlaufkörpers (2) über die kreisbogenförmige Vertiefung (41) der Steuerscheibe (4) mit der jeweiligen Durchlassöffnung (11) des Grundkörpers (1) für einen Drehwinkelbereich durchgängig verbunden ist, der dem Mittelpunktswinkel des Kreisbogens entspricht, und dass der Ansaugkanal (27) des Umlaufkörpers (2) gegenüber der jeweiligen Durchlassöffnung (11) des Grundkörpers (1) für einen Drehwinkel abgesperrt ist, der einem Winkel von 360 ° abzüglich des Mittelpunktswinkels des Kreisbogens entspricht.

2. Fördervorrichtung nach Anspruch 1, **dadurch gekennzeichnet, dass** die Steuerscheiben (4) in den Grundkörper (1) integriert sind.

3. Fördervorrichtung nach Anspruch 2, **dadurch gekennzeichnet, dass** der Grundkörper (1) als Trommelwalze mit zwei Grundseiten (13) und einer Mantelseite (12) ausgebildet ist, deren eine Grundseite (13) eine Mehrzahl an Drehlageröffnungen (16) aufweist, die als Lager der Schaftabschnitte (22) der Umlaufkörper (2) ausgebildet sind, wobei
jede Steuerscheibe (4) als kreisringförmiger Bereich der Grundseite (13) der Trommelwalze ausgebildet ist, der eine Ringgrundseite (43) umfasst, die jeweils eine Drehlageröffnung (16) konzentrisch umgibt und die eine erste Dichtfläche und die kreisbogenförmige Vertiefung (41) aufweist, die mit der jeweiligen Durchlassöffnung (11) des Grundkörpers (1) durchgängig verbunden ist.

4. Fördervorrichtung nach Anspruch 3, **dadurch gekennzeichnet, dass** jeder Umlaufkörper (2) eine um den Schaftabschnitt (22) angeordnete Kragenscheibe (24) mit einer mit der ersten Dichtfläche korrespondierenden zweiten Dichtfläche und einer Durchführungsöffnung (25), die den zweiten Endbereich des Ansaugkanals (27) bildet, aufweist, wobei
in Radialrichtung der mittlere Abstand der Durchführungsöffnung (25) von der Mittelachse des Schaftabschnitts (22) zumindest in etwa so groß ist wie der mittlere Abstand der kreisbogenförmigen Vertiefung (41) von dem Mittelpunkt der Drehlageröffnung (16).

5. Fördervorrichtung nach Anspruch 1, **dadurch gekennzeichnet, dass** jede Steuerscheibe (4) als Teil des zugeordneten Umlaufkörpers (2) ausgebildet ist.

6. Fördervorrichtung nach Anspruch 5, **dadurch gekennzeichnet, dass** die Steuerscheibe (4) eine mit dem Umlaufkörper (2) drehfest verbundene Ringscheibe ist, die eine äußere Mantelseite (42), eine innere Mantelseite (44) und zwei Ringgrundseiten (43) aufweist, wobei
die innere Mantelseite (44) einen Teilbereich des Schaftabschnitts (22) des Umlaufkörpers (2) umgibt,
die äußere Mantelseite (42) als erste Dichtfläche ausgebildet ist und die kreisbogenförmige Vertiefung (41) aufweist,
die kreisbogenförmige Vertiefung (41) zum Umfang der äußeren Mantelseite (42) zumindest im Wesentlichen parallel verläuft und den zweiten Endbereich des Ansaugkanals (27) bildet, und
die eine der beiden Ringgrundseiten (43) eine Durchführungsöffnung (25) aufweist, die einen Teil des Ansaugkanals (27) des Umlaufkörpers (2) bildet und die mit der kreisbogenförmigen Vertiefung (41) durchgängig verbunden ist.

7. Fördervorrichtung nach Anspruch 6, **dadurch gekennzeichnet, dass** der Grundkörper (1) als Trommelwalze mit zwei Grundseiten (13) und einer Mantelseite (12) ausgebildet ist, deren eine Grundseite (13) eine Mehrzahl an Drehlageröffnungen (16) aufweist, die als Lager der Schaftabschnitte (22) der Umlaufkörper (2) ausgebildet sind, wobei
jede Drehlageröffnung (16) in eine Aufnahmevertiefung (17) für eine Steuerscheibe (4) übergeht, die eine mit der ersten Dichtfläche korrespondierende zweite Dichtfläche sowie die Durchlassöffnung (11) aufweist, und
jeder Umlaufkörper (2) in der korrespondierenden Drehlageröffnung (16) derart angeordnet ist, dass in axialer Richtung der mittlere Abstand der kreisbogenförmigen Vertiefung (41) von den Ringgrundseiten (43) der Steuerscheibe (4) zumindest in etwa so groß ist wie der mittlere Abstand der Durchlassöffnung (11) von den Ringgrundseiten (43) der Steuerscheibe (4).

8. Fördervorrichtung nach einem der Ansprüche 5 bis 7, **dadurch gekennzeichnet, dass** die äußere Mantelseite (42) der Steuerscheibe (4) zusätzlich zu der kreisbogenförmigen Vertiefung (41) ein Unwuchtausgleichsmittel aufweist, das als kreisbogenförmige Aussparung (46) ausgebildet ist, die weder mit der kreisbogenförmigen Vertiefung (41) noch mit der Durchführungsöffnung (25) durchgängig verbunden ist und die auf der bezüglich der Mittelachse des Schaftabschnitts (22) der kreisbogenförmigen Vertiefung (41) gegenüberliegenden Seite der äußeren Mantelseite (42) der Steuerscheibe (4) angeordnet ist.

9. Fördervorrichtung nach einem der Ansprüche 1 bis 8, **dadurch gekennzeichnet, dass** der Grundkörper (1) ferner ein Planetengetriebe (15) umfasst, das innerhalb des Grundkörpers (1) angeordnet ist und das zum Drehen der Umlaufkörper (2) abtriebsseitig in den Schaftabschnitt (22) jedes Umlaufkörpers (2) eingreift.

10. Fördervorrichtung nach einem der Ansprüche 1 bis 9, **dadurch gekennzeichnet, dass** der Ansaugkanal (27) des Umlaufkörpers (2) ausschließlich aus geraden Kanalabschnitten und/oder aus Kanalumlenkabschnitten mit einem Umlenkwinkel von weniger als 90 ° gebildet wird.

11. Fördervorrichtung nach einem der Ansprüche 1 bis 10, **dadurch gekennzeichnet, dass** die Dwchlassöffnungen (11) des Grundkörpers (1) als radiale Öffnungen in der Mantelseite (12) des Grundkörpers (1) ausgebildet sind.

12. Fördervorrichtung nach Anspruch 11, **dadurch gekennzeichnet, dass** diese weiterhin einen Unterdruckverteiler (5) umfasst, der einen mit einer Pumpeneinrichtung verbundenen Unterdruckabschnitt (51) aufweist, der mit jeweils einer der radialen Öffnungen des Grundkörpers (1) über eine konkave Schlitzöffnung (53), die sich in einem konkaven Mantelseitenabschnitt (52) der Außenseite des Unterdruckverteilers (5) befindet, verbindbar ist, wobei der konkave Mantelseitenabschnitt (52) die Mantelseite (12) des Grundkörpers (1) teilumfänglich oder vollumfänglich derart umgibt, dass bei einer Drehbewegung des Grundkörpers (1) um seine Mittelachse stets zumindest einige der radialen Öffnungen in der Mantelseite (12) des Grundkörpers (1) mit dem Unterdruckabschnitt (51) des Unterdruckverteilers (5) über die konkave Schlitzöffnung (53) durchgängig verbunden sind.

13. Verfahren zum Umleiten von stabförmigen Artikeln (3) aus einem ersten Transportstrom in einen zweiten Transportstrom, wobei der eine der beiden Transportströme eine in Bezug auf die stabförmigen Artikel (3) längsaxiale Förderrichtung (L) aufweist und der andere der beiden Transportströme eine in Bezug auf die stabförmigen Artikel (3) queraxiale Förderrichtung (Q), die quer zur längsaxialen Förderrichtung (L) verläuft, aufweist, das Verfahren umfassend die Schritte:
a) in einem ersten Transportstrom wird zumindest ein stabförmiger Artikel (3) einem Längsförderer zugeführt, so dass der zumindest eine stabförmige Artikel (3) in die Nähe einer Ansaugöffnung eines Haltekopf (21) eines Umlaufkörpers (2) gelangt, der drehbar an einem seinerseits drehbaren Grundkörper (1) des Längsförderers gelagert ist,
b) der zumindest eine stabförmige Artikel (3) wird mittels Unterdruck an die Ansaugöffnung angesaugt,
c) der Grundkörper (1) des Längsförderers wird in einer ersten Drehrichtung gedreht und der Umlaufkörper (2) wird gleichzeitig gegenüber dem Grundkörper (1) in einer zweiten Drehrichtung, die der ersten Drehrichtung entgegengesetzt ist, gedreht, wobei der zumindest eine stabförmige Artikel (3) mittels Unterdruck an dem Haltekopf (21) des Umlaufkörpers (2) gehalten wird, bis eine Löseposition erreicht ist,
d) in der Löseposition wird der an dem Haltekopf (21) gehaltene zumindest eine stabförmige Artikel (3) von der Ansaugöffnung abgelöst, und
e) der zumindest eine stabförmige Artikel (3) wird in einen zweiten Transportstrom weitergeleitet, wobei
f) das Ansaugen und Ablösen des zumindest einen stabförmigen Artikels (3) durch Öffnen bzw. Schließen eines Flächenventils gesteuert wird, das während des Haltens des zumindest einen stabförmigen Artikels (3) geöffnet ist,
g) wobei das Öffnen und Schließen des Flächenventils infolge der Drehbewegung des Umlaufkörpers (2) relativ zum Grundkörper (1) eintritt,
**dadurch gekennzeichnet, dass**
entweder das Flächenventil geöffnet wird, indem bei der Drehbewegung des Umlaufkörpers (2) eine Durchführungsöffnung (25) im Umlaufkörper (2) vor eine kreisbogenförmige Vertiefung (41) im Grundkörper (1) gebracht wird, und das Flächenventil geschlossen wird, indem die Durchführungsöffnung (25) im Umlaufkörper (2) von der kreisbogenförmigen Vertiefung (41) im Grundkörper (1) weg gedreht wird, oder das Flächenventil geöffnet wird, indem bei der Drehbewegung des Umlaufkörpers (2) eine kreisbogenförmige Vertiefung (41) im Umlaufkörper (2) vor eine Durchlassöffnung (11) im Grundkörper (1) gebracht wird, und das Flächenventil geschlossen wird, indem die kreisbogenförmige Vertiefung (41) des Umlaufkörpers (2) von der Durchlassöffnung (11) im Grundkörper (1) weg gedreht wird.

## Claims

1. Conveying apparatus for rod-shaped articles (3) for diverting the rod-shaped articles (3) out of a first transport stream into a second transport stream, wherein one of the two transport streams has a direction of conveying (L) which is longitudinally axial in relation to the rod-shaped articles (3), and the other of the two transport streams has a direction of conveying (Q) which is transversely axial in relation to the rod-shaped articles (3) and which runs transversely to the longitudinally axial direction of conveying (L), the conveying apparatus comprising a longitudinal conveyor having a base unit (1) and a plurality of circulating bodies (2),
wherein the base unit (1) comprises a plurality of through-openings (11) and is mounted rotatably for a rotational movement about its centre axis,
wherein each of the circulating bodies (2) comprises a shaft section (22), a suction channel (27) and at least one holding head (21) and is adapted for a circulating movement on a defined path of circulation during the rotational movement of the base unit (1) about its centre axis,
of which the shaft section (22) is mounted so as to be rotatable about the centre axis of the shaft section (22) in the base unit (1),
of which the at least one holding head (21) has at least one suction opening and is adapted for holding at least one rod-shaped article (3) by means of a vacuum at the at least one suction opening, and
of which the suction channel (27) has a first end region at one end and a second end region at its other end, wherein the first end region is continuously connected to the at least one suction opening of the holding head (21) and wherein the second end region can be continuously connected to one through-opening (11) of the base unit at a time,
**characterised in that**
each circulating body (2) is assigned a control cam (4) which is provided on at least one portion of the shaft section (22) and which is designed to control the continuity of the connection between the second end region of the suction channel (27) of the circulating body (2) and the through-opening (11) of the base unit (1) during a rotational movement of the circulating body (2) about the centre axis of the shaft section (22),
wherein the control cam (4) has an arcuate depression (41)
which is arranged on a full circle which is at least substantially concentric in relation to the centre axis of the shaft section (22), as an arc which has a central angle of less than 360°, and
which is constructed in such a way that, with each full-circle rotation of the circulating body (2) about the centre axis of the shaft section (22), the suction channel (27) of the circulating body (2) is continuously connected via the arcuate depression (41) of the control cam (4) to the respective through-opening (11) of the base unit (1) for a range of angles of rotation which corresponds to the central angle of the arc, and **in that** the suction channel (27) of the circulating body (2) is shut off from the respective through-opening (11) of the base unit (1) for an angle of rotation which corresponds to an angle of 360° minus the central angle of the arc.

2. Conveying apparatus according to claim 1, **characterised in that** the control cams (4) are integrated in the base unit (1).

3. Conveying apparatus according to claim 2, **characterised in that** the base unit (1) is constructed as a drum roller with two base sides (13) and a shell side (12), of which one base side (13) has a plurality of pivot-bearing openings (26) which are designed as bearings for the shaft sections (22) of the circulating bodies (2), wherein
each control cam (4) is designed as a ring-shaped region of the base side (13) of the drum roller which encompasses a base side of the ring (43) which concentrically surrounds pivot-bearing opening (16), each, and which has a first sealing surface and the arcuate depression (41) which is continuously connected to the respective through-opening (11) of the base unit (1).

4. Conveying apparatus according to claim 3, **characterised in that** each circulating body (2) has a collar disc (24) which is arranged round the shaft section (22) and which has a second sealing surface corresponding to the first surface and a feedthrough opening (25) which forms the second end region of the suction channel (27), wherein
in the radial direction the average distance between the feedthrough opening (25) and the centre axis of the shaft section (22) is at least approximately as great as the average distance between the arcuate depression (41) and the centre of the pivot-bearing opening (16).

5. Conveying apparatus according to claim 1, **characterised in that** each control cam (4) is designed as part of the associated circulating body (2).

6. Conveying apparatus according to claim 5, **characterised in that** the control cam (4) is a ring disc which is non-rotatably connected to the circulating body (2) and which has an outer shell side (42), an inner shell side (44) and two base sides of the ring (43), wherein
the inner shell side (44) surrounds a partial region of the shaft section (22) of the circulating body (2),
the outer shell side (42) is designed as a first sealing surface and has the arcuate depression (41),
the arcuate depression (41) runs at least substantially parallel to the circumference of the outer shell side (42) and forms the second end region of the suction channel (27), and
one of the two base sides of the ring (43) has a feedthrough opening (25) which forms part of the suction channel (27) of the circulating body (2) and which is continuously connected to the arcuate depression (41).

7. Conveying apparatus according to claim 6, **characterised in that** the base unit (1) is constructed as a drum roller with two base sides (13) and a shell side (12), of which one base side (13) has a plurality of pivot-bearing openings (16) which are designed as bearings for the shaft sections (22) of the circulating bodies (2), wherein
each pivot-bearing opening (16) merges with a depression (17) for receiving a control cam (4) which has a second sealing surface corresponding to the first sealing surface as well as the through-opening (11), and
each circulating body (2) is arranged in the corresponding pivot-bearing opening (16) in such a way that in the axial direction the average distance between the arcuate depression (41) and the base sides of the ring (43) of the control cam (4) is at least approximately as great as the average distance between the through-opening (11) and the base sides of the ring (43) of the control cam (4).

8. Conveying apparatus according to any one of claims 5 to 7, **characterised in that** the outer shell side (42) of the control cam (4) in addition to the arcuate depression (41) has an unbalance-equalising means which is designed as an arcuate recess (46) which is not continuously connected either to the arcuate depression (41) or to the feedthrough opening (25) and which is arranged on the side of the outer shell side (42) of the control cam (4) located opposite the arcuate depression (41) in relation to the centre axis of the shaft section (22).

9. Conveying apparatus according to any one of claims 1 to 8, **characterised in that** the base unit (1) further comprises a planetary gear system (15) which is arranged within the base unit (1) and which for rotation of the circulating bodies (2) on the output side engages in the shaft section (22) of each circulating body (2).

10. Conveying apparatus according to any one of claims 1 to 9, **characterised in that** the suction channel (27) of the circulating body (2) is composed exclusively of straight channel sections and/or channel deflecting sections with an angle of deflection of less than 90°.

11. Conveying apparatus according to any one of claims 1 to 10, **characterised in that** the through-openings (11) of the base unit (1) are designed as radial openings in the shell side (12) of the base unit (1).

12. Conveying apparatus according to claim 11, **characterised in that** it further comprises a vacuum distributor (5) having a vacuum section (51) which is connected to a pump mechanism and which can be connected to one of the radial openings, each, of the base unit (1) via a concave slit opening (53) which is located in a concave shell-side section (52) of the outside of the vacuum distributor (5), wherein the concave shell-side section (52) surrounds the shell side (12) of the base unit (1) over part or all of its circumference in such a way that, during a rotational movement of the base unit (1) about its centre axis, at least some of the radial openings in the shell side (12) of the base unit (1) are at all times continuously connected to the vacuum section (51) of the vacuum distributor (5) via the concave slit opening (53).

13. Method for diverting rod-shaped articles (3) out of a first transport stream into a second transport stream, wherein one of the two transport streams has a direction of conveying (L) which is longitudinally axial in relation to the rod-shaped articles (3), and the other of the two transport streams has a direction of conveying (Q) which is transversely axial in relation to the rod-shaped articles (3) and which runs transversely to the longitudinally axial direction of conveying (L), the method comprising the steps:
a) in a first transport stream at least one rod-shaped article (3) is delivered to a longitudinal conveyor, so that the at least one rod-shaped article (3) comes into the vicinity of an suction opening of a holding head (21) of a circulating body (2) which is mounted rotatably on a base unit (1) of the longitudinal conveyor which is in turn rotatable,
b) the at least one rod-shaped article (3) is drawn to the suction opening by a vacuum,
c) the base unit (1) of the longitudinal conveyor is rotated in a first direction of rotation and the circulating body (2) is simultaneously rotated relative to the base unit (1) in a second direction of rotation which is opposite the first direction of rotation, wherein the at least one rod-shaped article (3) is held by a vacuum on the holding head (21) of the circulating body (2) until a release position is reached,
d) in the release position the at least one rod-shaped article (3) which is held on the holding head (21) is released from the suction opening, and
e) the at least one rod-shaped article (3) is conveyed further into a second transport stream, wherein
f) suction and release of the at least one rod-shaped article (3) is controlled by opening and closing of a surface valve which is opened during the holding of the at least one rod-shaped article (3),
g) wherein the opening and closing of the surface valve occur as a result of the rotational movement of the circulating body (2) relative to the base unit (1),
**characterised in that**
either the surface valve is opened by the fact that, during the rotational movement of the circulating body (2), a feedthrough opening (25) in the circulating body (2) is brought in front of an arcuate depression (41) in the base unit (1), and the surface valve is closed by the fact that the feedthrough opening (25) in the circulating body (2) is rotated away from the arcuate depression (41) in the base unit (1), or the surface valve is opened by the fact that, during the rotational movement of the circulating body (2), an arcuate depression (41) in the circulating body (2) is brought in front of a through-opening (11) in the base unit (1), and the surface valve is closed by the fact that the arcuate depression (41) of the circulating body (2) is rotated away from the through-opening (11) in the base unit (1).

## Revendications

1. Dispositif de transport pour articles (3) en forme de tiges, destiné à dévier les articles (3) en forme de tiges d'un premier courant de transport dans un deuxième courant de transport, l'un des deux courants de transport présentant une direction de transport axiale longitudinale (L) par rapport aux articles (3) en forme de tiges et l'autre des deux courants de transport présentant une direction de transport axiale transversale (Q) par rapport aux articles (3) en forme de tiges, laquelle s'étend transversalement à la direction de transport axiale longitudinale (L), le dispositif de transport comprenant un convoyeur longitudinal pourvu d'un corps de base (1) et d'une pluralité de corps rotatifs (2),
dans lequel le corps de base (1) comporte une pluralité d'ouvertures de passage (11) et est monté à rotation autour de son axe médian pour un mouvement de rotation,
chacun des corps rotatifs (2) comprenant une partie tige (22), un canal d'aspiration (27) et au moins une tête de retenue (21) et étant conçu pour un mouvement rotatif sur une trajectoire de rotation définie lors du mouvement de rotation du corps de base (1) autour de son axe médian,
la partie tige (22) étant montée à rotation dans le corps de base (1) autour de l'axe médian de la partie tige (22),
ladite au moins une tête de retenue (21) présentant au moins un orifice d'aspiration et étant conçue pour retenir au moins un article (3) en forme de tige au moyen d'une dépression opérée au niveau dudit au moins un orifice d'aspiration, et
le canal d'aspiration (27) présentant, à une extrémité, une première région d'extrémité et, à l'autre extrémité, une deuxième région d'extrémité, la première région d'extrémité étant reliée de manière continue audit au moins un orifice d'aspiration de la tête de retenue (21) et la deuxième région d'extrémité étant conçue de manière à pouvoir être reliée de manière continue respectivement à une ouverture de passage (11) du corps de base (1),
**caractérisé en ce que**
à chaque corps rotatif (2) est associé un disque de commande (4) qui est prévu au moins au niveau d'une partie de la partie tige (22) et qui est agencé pour commander la continuité de la liaison entre la deuxième région d'extrémité du canal d'aspiration (27) du corps rotatif (2) et l'ouverture de passage (11) du corps de base (1) lors d'un mouvement de rotation du corps rotatif (2) autour de l'axe médian de la partie tige (22),
le disque de commande (4) présentant un évidement (41) en forme d'arc de cercle, qui
est disposé sur un cercle complet, lequel est au moins sensiblement concentrique à l'axe médian de la partie tige (22), sous la forme d'un arc de cercle qui présente un angle au centre inférieur à 360°, et
est conçu de façon qu'à chaque rotation sur cercle complet du corps rotatif (2) autour de l'axe médian de la partie tige (22), le canal d'aspiration (27) du corps rotatif (2) est relié de manière continue, par l'intermédiaire de l'évidement (41) en forme d'arc de cercle du disque de commande (4), à l'ouverture de passage (11) respective du corps de base (1) pour une plage angulaire de rotation qui correspond à l'angle au centre de l'arc de cercle, et **en ce que** le canal d'aspiration (27) du corps rotatif (2) est obturé par rapport à l'ouverture de passage (11) respective du corps de base (1) pour un angle de rotation qui correspond un angle de 360°, déduction faite de l'angle au centre de l'arc de cercle.

2. Dispositif de transport selon la revendication 1, **caractérisé en ce que** les disques de commande (4) sont intégrés dans le corps de base (1).

3. Dispositif de transport selon la revendication 2, **caractérisé en ce que** le corps de base (1) est conçu sous forme de tambour doté de deux faces de base (13) et d'une face d'enveloppe (12), dont une face de base (13) présente une pluralité d'ouvertures de coussinets de pivotement (16) qui sont réalisés en tant que coussinets des parties tige (22) des corps rotatifs (2),
chaque disque de commande (4) étant réalisé comme une région en forme d'anneau de cercle de la face de base (13) du tambour, comprenant une face de base circulaire (43) qui entoure de façon concentrique une ouverture de coussinet de pivotement (16) respective et qui présente une première surface d'étanchéité et l'évidement en arc de cercle (41) qui est relié de manière continue à l'ouverture de passage (11) respective du corps de base (1).

4. Dispositif de transport selon la revendication 3, **caractérisé en ce que** chaque corps rotatif (2) présente une rondelle à collet (24) disposée autour de la partie tige (22), pourvue d'une deuxième surface d'étanchéité correspondant à la première surface d'étanchéité et d'une ouverture de passage (25) qui forme la deuxième région d'extrémité du canal d'aspiration (27),
la distance moyenne, en direction radiale, entre l'ouverture de passage (25) et l'axe médian de la partie tige (22) étant au moins sensiblement égale à la distance moyenne entre l'évidement en arc de cercle (41) et le centre de l'ouverture de coussinet de pivotement (16).

5. Dispositif de transport selon la revendication 1, **caractérisé en ce que** chaque disque de commande (4) est conçu en tant que partie du corps rotatif (2) associé.

6. Dispositif de transport selon la revendication 5, **caractérisé en ce que** le disque de commande (4) présente un disque annulaire relié de façon fixe en rotation au corps rotatif (2), qui comporte une face d'enveloppe extérieure (42), une face d'enveloppe intérieure (44) et deux faces de base annulaires (43),
la face d'enveloppe intérieure (44) entourant une région partielle de la partie tige (22) du corps rotatif (2),
la face d'enveloppe extérieure (42) étant réalisée en tant que première surface d'étanchéité et présentant l'évidement en arc de cercle (41),
l'évidement en arc de cercle (41) étant au moins sensiblement parallèle à la périphérie de la face d'enveloppe extérieure (42) et formant la deuxième région d'extrémité du canal d'aspiration (27), et
l'une des deux faces de base annulaires (43) présentant une ouverture de passage (25) qui forme une partie du canal d'aspiration (27) du corps rotatif (2) et est reliée de manière continue à l'évidement en arc de cercle (41).

7. Dispositif de transport selon la revendication 6, **caractérisé en ce que** le corps de base (1) est conçu sous forme de tambour doté de deux faces de base (13) et d'une face d'enveloppe (12), dont une face de base (13) présente une pluralité d'ouvertures de coussinets de pivotement (16) qui sont réalisés en tant que coussinets des parties tige (22) des corps rotatifs (2),
chaque ouverture de coussinet de pivotement (16) se transformant en un évidement (17) de réception d'un disque de commande, qui présente une deuxième surface d'étanchéité correspondant à la première surface d'étanchéité ainsi que l'ouverture de passage (11), et
chaque corps rotatif (2) étant disposé dans l'ouverture de coussinet de pivotement (16) correspondante, de façon telle qu'en direction axiale, la distance moyenne entre l'évidement en arc de cercle (41) et les faces de base annulaires (43) du disque de commande (4) est au moins sensiblement égale à la distance moyenne entre l'ouverture de passage (11) et les faces de base annulaires (43) du disque de commande (4).

8. Dispositif de transport selon l'une des revendications 5 à 7, **caractérisé en ce que** la face d'enveloppe extérieure (42) du disque de commande (4) présente, outre l'évidement en forme d'arc de cercle (41), un moyen de compensation de déséquilibre qui est configuré comme un évidement en forme d'arc de cercle (46) qui n'est relié en continu ni à l'évidement en arc de cercle (41), ni à l'ouverture de passage (25) et qui est disposé sur le côté de la face d'enveloppe extérieure (42) du disque de commande (4) opposé à l'évidement en arc de cercle (41) par rapport à l'axe médian de la partie tige (22).

9. Dispositif de transport selon l'une des revendications 1 à 8, **caractérisé en ce que** le corps de base (1) comprend, en outre, un engrenage planétaire (15) disposé à l'intérieur du corps de base (1) et venant en prise, côté sortie, dans la partie tige (22) de chaque corps rotatif (2) pour faire pivoter le corps rotatif (2).

10. Dispositif de transport selon l'une des revendications 1 à 9, **caractérisé en ce que** le canal d'aspiration (27) du corps rotatif (2) est formé exclusivement de portions de canal rectilignes et/ou de portions de déviation de canal ayant un angle de déviation inférieur à 90°C.

11. Dispositif de transport selon l'une des revendications 1 à 10, **caractérisé en ce que** les ouvertures de passage (11) du corps de base (1) ont la forme d'ouvertures radiales dans la face d'enveloppe (12) du corps de base (1).

12. Dispositif de transport selon la revendication 11, **caractérisé en ce que** celui-ci comprend, en outre, un distributeur de vide (5) qui présente une section de dépression (51) reliée à un système de pompe, qui peut être reliée respectivement à l'une des ouvertures radiales du corps de base (1) via une fente (53) concave se trouvant dans une portion de face d'enveloppe concave (52) de la face extérieure du distributeur de vide (5), la portion de face d'enveloppe concave (52) entourant la face d'enveloppe (12) du corps de base (1) sur une partie de sa périphérie ou sur toute sa périphérie de façon telle que, lors d'un mouvement de rotation du corps de base (1) autour de son axe médian, au moins quelques-unes des ouvertures radiales aménagées dans la face d'enveloppe (12) du corps de base (1) soient constamment reliées de manière continue avec la section de dépression (51) du distributeur de vide (5) via la fente concave (53).

13. Procédé destiné à dévier des articles (3) en forme de tiges d'un premier courant de transport dans un deuxième courant de transport, l'un des deux courants de transport présentant une direction de transport axiale longitudinale (L) par rapport aux articles (3) en forme de tiges et l'autre des deux courants de transport présentant une direction de transport axiale transversale (Q) par rapport aux articles (3) en forme de tiges, laquelle s'étend transversalement à la direction de transport axiale longitudinale (L), le procédé comprenant les étapes suivantes :
a) dans un premier courant de transport, au moins un article (3) en forme de tige est acheminé à un convoyeur longitudinal de façon que ledit au moins un article (3) en forme de tige parvienne à proximité d'un orifice d'aspiration d'une tête de retenue (21) d'un corps rotatif (2) qui est monté à rotation sur un corps de base (1), lui-même rotatif, du convoyeur longitudinal,
b) ledit au moins un article (3) en forme de tige est aspiré sur l'orifice d'aspiration au moyen d'une dépression,
c) le corps de base (1) du convoyeur longitudinal est amené à tourner dans une première direction de rotation et le corps rotatif (2) est amené à tourner simultanément par rapport au corps de base (1) dans une deuxième direction de rotation qui est opposée à la première direction de rotation, ledit au moins un article (3) en forme de tige étant maintenu au moyen d'une dépression au niveau de la tête de retenue (21) du corps rotatif (2) jusqu'à ce qu'une position de détachement soit atteinte,
d) dans la position de détachement, ledit au moins un article (3) en forme de tige maintenu au niveau de la tête de retenue (21) est détaché de l'orifice d'aspiration, et
e) ledit au moins un article (3) en forme de tige est transféré dans un deuxième courant de transport,
f) l'aspiration et le détachement dudit au moins un article (3) en forme de tige étant commandé(e) par ouverture ou fermeture d'un clapet de surface qui est ouvert pendant le maintien dudit au moins un article (3) en forme de tige,
g) l'ouverture et la fermeture du clapet de surface s'opérant du fait du mouvement de rotation du corps rotatif (2) par rapport au corps de base (1),
**caractérisé en ce que**
soit le clapet de surface est ouvert en amenant, lors du mouvement de rotation du corps rotatif (2), une ouverture de passage (25) prévue dans le corps rotatif (2) devant un évidement (41) en arc de cercle prévu dans le corps de base (1), et le clapet de surface est fermé en éloignant par rotation l'ouverture de passage (25) prévue dans le corps rotatif (2) de l'évidement (41) en arc de cercle prévu dans le corps de base (1),
soit le clapet de surface est ouvert en amenant, lors du mouvement de rotation du corps rotatif (2), un évidement (41) en arc de cercle prévu dans le corps rotatif (2) devant une ouverture de passage (11) prévue dans le corps de base (1), et le clapet de surface est fermé en éloignant par rotation l'évidement (41) en arc de cercle du corps rotatif (2) de l'ouverture de passage (11) prévue dans le corps de base (1).
